# EUROPEAN PATENT SPECIFICATION

(11) **EP 1 367 502 B1**
(45) Date of publication and mention of the grant of the patent: **14.08.2013**
(21) Application number: 01912197.9
(22) Date of filing: 08.03.2001
(51) Int. Cl.: H04N 7/14, H04N 7/15, H04N 21/462, G06F 17/30, H04N 21/435, H04N 21/475, H04N 21/8543, H04N 21/4782, H04N 21/4786, H04N 21/4788

(54) **Multimedia Cooperative Work System and Method**
Kooperatives Multimedia-Arbeitssystem und Verfahren
Système et procédede du travail cooperatvie du multimédia

(43) Date of publication of application: 03.12.2003
(73) Proprietor: FUJITSU LIMITED, Kawasaki-shi, Kanagawa 211-8588 (JP)
(72) Inventor: KAZUI, Kimihiko, c/o FUJITSU LIMITED, Kawasaki-shi, Kanagawa 211-8588 (JP); MIZUTANI, Masami, c/o FUJITSU LIMITED, Kawasaki-shi, Kanagawa 211-8588 (JP); MORIMATSU, Eishi, c/o FUJITSU LIMITED, Kawasaki-shi, Kanagawa 211-8588 (JP)
(74) Representative: HOFFMANN EITLE
(86) International application number: PCT/JP2001/001822
(87) International publication number: WO 2002/073462

(56) References cited:
- WO-A-99/46702
- JP-A- 4 177 568
- JP-A- 2000 232 635
- JP-A- 2000 232 635
- BALABANOVIC M: "Multimedia chronicles for business communication" SYSTEM SCIENCES, 2000. PROCEEDINGS OF THE 33RD ANNUAL HAWAII INTERNATIONAL CONFERENCE ON JAN 4-7, 2000, PISCATAWAY, NJ, USA,IEEE, 4 January 2000 (2000-01-04), pages 1063-1072, XP010545346 ISBN: 0-7695-0493-0
- MATSUI SHINICHI: 'Douga, onsei stream tougo seigyogata joho kaden you web architecture' MATSUSHITA TECHNICAL JOURNAL vol. 44, no. 5, 05 October 1998, pages 106 - 112, XP002940666

## Description

### Technical Field

The present invention generally relates to computer system and multimedia communication fields and in particular, relates to a multimedia cooperative work system for enabling a plurality of clients in a network to exchange opinions on an arbitrary multimedia data and realizing the improved efficiency of work, such as the co-editing work, commenting and the like, of multimedia data and the method thereof.

### Background Art

Owing to the advancement of computer technologies, the digital processing of entire multimedia data, such as character data, dynamic images and voice in a computer has become possible. In this way, a function for efficiently processing/operating multimedia data, which could not be possible by a conventional analog treatment, has been realized.

The electronic tag of an electronic document is one of such examples. Currently, markers/comments are attached to a printed document in order to misprint is pointed out (one type of co-editing work) or to refer to important items later (supplementary work for user's understanding /recognition). However, if a target document is another person's, no character can be directly written in it. Another person also cannot extract or use such comments.

An electronic memorandum can solve this problem by managing an original electronic document, an electronic tag and correspondence data between the original electronic document and electronic tag (for example, information that this comment is for line M of page N) as.an individual piece of electronic data. By utilizing a variety of digital data processing technologies, such information can be displayed and presented to a user as if an electronic tag were embedded in an electronic document. As a publicly known case of such a prior art, there is Japanese Patent Laid-open No. 2000-163414 and the like.

In particular, recently, since dynamic image(moving image)/voice processing technology (storage, transmission, encryption/conversion and the like) has been improved, an environment in which a general user can utilize dynamic image/voice data lightheartedly, exists. For example, the following usages are available.
(1) Dynamic image/voice data that are compressed to several hours' data and are stored on a CD (compact disc) or DVD (digital versatile disc) can be reproduced and appreciatedin a TV monitor at home.
(2) Live images that are broadcast in real time in a network can be viewed lightheartedly using a computer connected to the Internet.
(3) AV data (AV; audio/visual, dynamic image data and the audio data to be synchronized with the dynamic image data and to be reproduced) taken by a home digital video camera can be enjoyed together with friends by sending the AV data to the friends by electronic mail and sharing the AV data with them.

As one of the prior art for attaching comments and the like in an environment where multimedia data, including such dynamic image (moving image) data can be transmitted/received through a network, there is a document editing device (Japanese Patent Application No. 2-305770) (hereinafter called the "first prior art") . This editing device has a function to manage, edit and relate comments to realize the intra-group cooperative work of an electronic document composed of a variety of multimedia data, such as characters, static images, graphics, dynamic images and the like. A comment can also be attached to a comment.

Another prior art is a video message transmission system and the method thereof (Japanese Patent Application N. 11-368078)(hereinafter called the "second prior art"). This system/method enables a receiving user to access/process dynamic image data in units of segments by transmitting the dynamic image data together with the time sequence data and comment data of the dynamic image when a user transmits the captured dynamic image data to another user.

The applicant of the present invention has supposed that, for example, the following services should be realized.

As one example, there is a network appreciation service. For example, if one member of a local community (a group of neighborhood friends and the like) distributes/shares the AV data of an event, such as an athletic meeting at school, camp/drive and the like photographed by him to/with the members through a network, each member's comments ("A person photographed at this scene is the son of Mr.OO.", "This scene is memorable." and the like) can be exchanged between the members. In this way, he can comment on the AV data together with the members participating in the event as if they were together at his house and holding a video Show.

As another example, there is the co-editing work supplementary service of AV data through a network. In this case, the comments are "This scene is re-arrayed after another scene.", "Since this scene is important, the broadcast time should be extended." and the like. Furthermore, final user comments can be used as automatically edited AV script by introducing a specific editing command as a kind of comment (this user comment corresponds to an electronic tag in an electronic document and, in particular, is called as a "multimedia electronic tag" in this specification).

However, the realization of such a service is not supposed in the prior arts described above and there is no technology for realizing such a service. For example, in the first prior art, a point (scene) in the time sequence of time-sequential data such as dynamic image data cannot be specified nor can a comment be attached. In the second prior art, the use of additional information by another user is not intended.

WO-A-99/46702 discloses a method for dynamic video annotation among a plurality of users utilizes a programmable computer and comprises the steps of: selecting a network service coupled to the computer; performing one of (a) starting and (b) joining a collaborative session among the users; loading one of (a) a video and (b) a recorded annotation file; performing annotation of at least one of graphical, text, and audio annotation; and storing said collaborative session.

w3.org/TR/REC-smil - 19980615 discloses version 1 of the Synchronized Multimedia Integration Language (SMIL). SMIL allows integrating a set of independent multimedia objects into a synchronized multimedia presentation. Using SMIL, an author can (1) describe the temporal behaviour of the presentation; (2) describe the layout of the presentation on a screen; and (3) associate hyperlinks with media objects. This disclosure presents the specification approach, defines the "smil" element, defines the elements that can be contained in the head part of a SMIL document, defines the elements that can be contained in the body part of a SMIL document and describes the SMIL DTD.

As described above, an object of the present invention is to provide a multimedia cooperative work system, the client/server, method, storage medium and program thereof enabling a plurality of clients in a network to exchange opinions on arbitrary multimedia data and realizing the improved efficiency of work, such as the co-editing work, commenting and the like, of multimedia data.

### Disclosure of Invention

According to the present invention there is provided a multimedia cooperative work system according to Claim 1.

Moreover, the present invention provides a multimedia cooperative work method according to Claim 10.

Optional features are set out in the dependent claims.

### Brief Description of Drawings

Fig. 1 shows the basic configuration of the present invention.
Fig. 2 shows the functional configuration of the entire multimedia cooperative work system.
Fig. 3 is a flowchart showing the operation of the entire multimedia cooperative work system.
Fig. 4 shows the internal data format of a management information DB.
Fig. 5 shows a specific example of the described content of a multimedia electronic tag (No. 1).
Fig. 6 shows a specific example of the described content of a multimedia electronic tag (No. 2).
Fig. 7 shows one example of the comment list display/comment input screen of a multimedia electronic tag displayed on the monitor of each client.
Fig. 8 is a flowchart showing the entire conversion process to a multimedia synchronization /reproduction format.
Fig. 9 is a flowchart showing the detailed tag <video> generation process in step S12 shown in Fig. 8.
Fig. 10 is a flowchart showing the detailed tag <text> generation process in step S13 shown in Fig. 8.
Fig. 11 shows the transition of the contents of a stack and stored tag <MediaTime> in the case where the process shown in Fig. 10 is applied to the multimedia electronic tag shown in Fig. 5.
Fig. 12 shows the result obtained by converting the format of a multimedia electronic tag shown in Fig. 5 into a multimedia synchronous reproduction format (in this example, SMIL format) by the processes described with reference to Figs.8 through 11 (No. 1).
Fig. 13 shows the result obtained by converting the format of a multimedia electronic tag shown in Fig. 5 into a multimedia synchronous reproduction format (in this example, SMIL) by the processes described with reference to Figs. 8 through 11 (No. 2).
Fig. 14 shows a display example of a dynamic image/comments obtained by reproducing the SMIL documents shown in Figs. 12 and 13 by a multimedia synchronous reproduction unit 27.
Fig. 15 shows one example of the basic hardware configuration of a computer.
Fig. 16 shows the loading onto a computer of a program.

### Best Mode for carrying Out the Invention

The preferred embodiments of the present invention are described below with reference to the drawings.

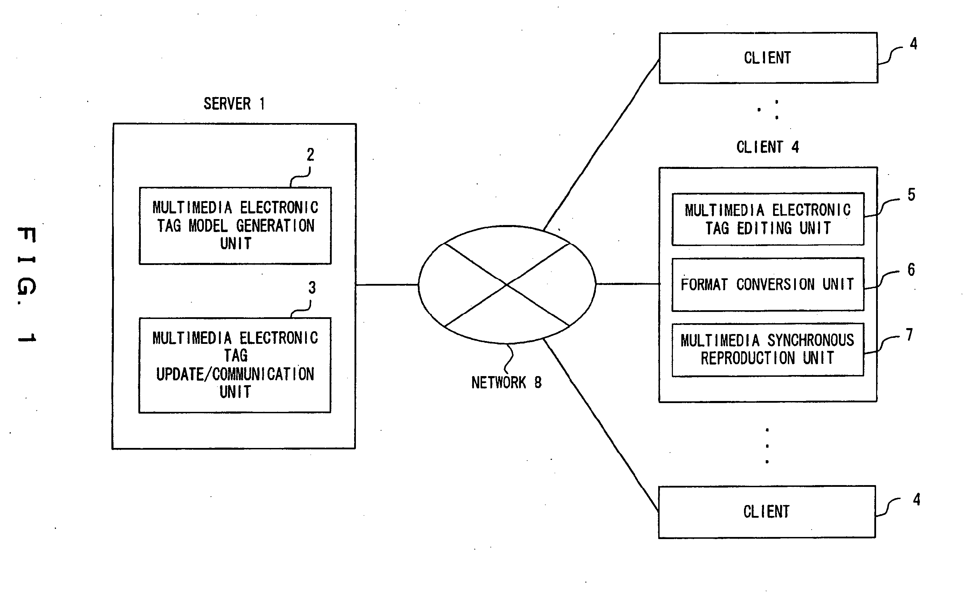

Fig. 1 shows the basic configuration of the present invention.

In Fig. 1, a server 1 can communicate with each client 4 through a network 8 (for example, the Internet) .

The server .1 comprises a multimedia electronic tag model generation unit 2 and a multimedia electronic tag modification/communication unit 3.

The multimedia electronic tag model generation unit 2 generates the model of a multimedia electronic tag in which a comment and the attribute data thereof can be displayed/inputted in hierarchical tree shape for each scene of multimedia data, the registration of which is requested by an arbitrary client in a server, obtained by dividing the multimedia data in terms of time.

For the attribute data, for example, a comment writer name, a comment generation date, a comment destination (comment on whose comment) and the like, are used.

The publication destination or expiration date of a comment is described in the multimedia electronic tag as one kind of the attribute data of a comment.

The multimedia electronic tag modification /communication unit 3 deletes an overdue comment from a multimedia electronic tag or upon receipt of a multimedia electronic tag request from an arbitrary member client, the unit 3 transmits a multimedia electronic tag from which comments not belonging to this client as a publication destination are deleted, to the requesting client.

Each client 4 comprises a multimedia electronic tag editing unit 5, a format conversion unit 6 and a multimedia synchronous reproduction unit 7 and the like.

The multimedia electronic tag editing unit 5 displays a comment with attribution data attached to each scene of multimedia data corresponding to the multimedia electronic tag, using the multimedia electronic tag obtained from a server or another client. Simultaneously, the unit 5 enables a comment to be inputted to an arbitrary scene or comment and updates the content of the multimedia electronic tag, based on the input.

The format conversion unit 6 converts the format of a multimedia electronic tag into a format in which multimedia data and the comments thereof are synchronized/reproduced.

The multimedia synchronous reproduction unit 7 synchronizes multimedia data with comments corresponding to each scene of the multimedia data and displays the multimedia data and comments, using the conversion result by the format conversion unit 6.

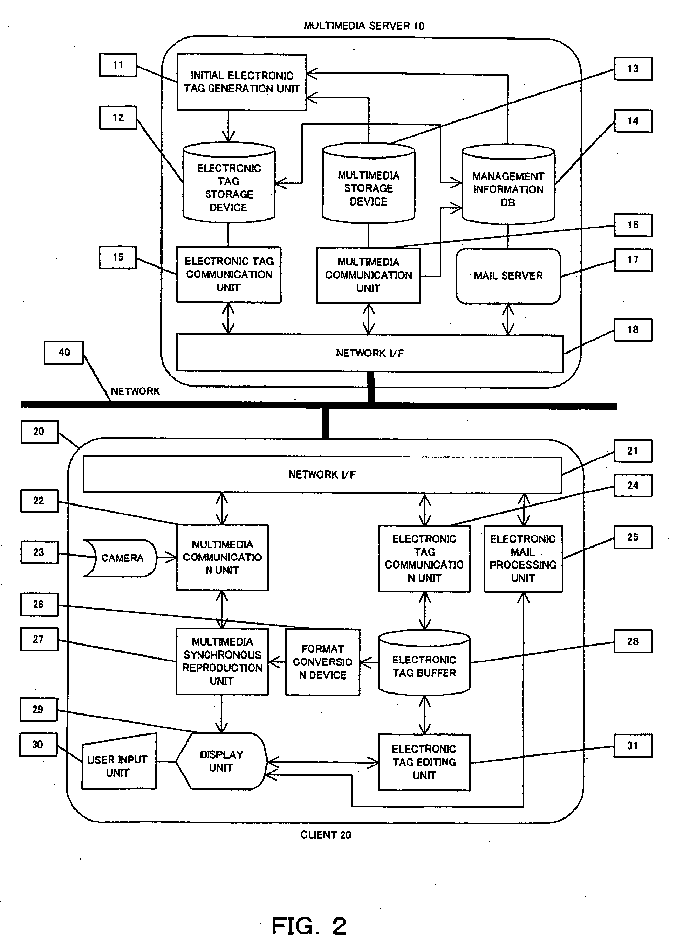

Fig. 2 shows the configuration of an entire multimedia cooperative work system according to the preferred embodiment.

In Fig. 2, a multimedia server 10 provides a multimedia electronic tag service.

This multimedia server 10 comprises an electronic tag storage device 12 storing multimedia electronic tags, a multimedia storage device 13 storing multimedia data, a management information DB 14 storing member data, an electronic tag communication unit 15 exchanging a multimedia electronic tag with a client, a multimedia communication unit 16 exchanging multimedia data with a client, a mail server 17 distributing electronic mail to be exchanged between clients, a network I/F 18, which interfaces the electronic tag communication unit 15/multimedia communication unit 16/mail server 17 with a network, and an initial electronic tag generation unit 11 generating an initial multimedia electronic tag, based on member data and multimedia data.

A client 20 is a terminal used for each user to obtain a multimedia electronic tag service. Although there are a plurality of clients 20 with the same configuration in the network, they are omitted in Fig. 1.

The client 20 comprises a multimedia communication unit 22 exchanging multimedia data with a server, a camera 23 used for a user to generate multimedia data, an electronic tag communication unit 24 exchanging a multimedia electronic tag with a server and/or a client, an electronic mail processing unit 25 performing a variety of electronic mail processes (the generation of electronic mail/display screen to be presented to a user, electronic mail exchange between clients, and the like), an electronic tag buffer 28 storing multimedia electronic tags, a format conversion device 26 converting the format of a multimedia electronic tag into a multimedia synchronization /reproduction format, a multimedia synchronization /reproduction unit 27 synchronizing multimedia data with the multimedia electronic tag, the format of which is converted by the format conversion device 26, in terms of time and space, an electronic tag editing unit 31 performing a variety of multimedia electronic tag processes (the display of a multimedia electronic tag to be presented to a user, the generation of a comment input screen, the update of a multimedia electronic tag and the like), a display unit 29 displaying screens generated by the multimedia synchronization /reproduction unit 27, electronic tag editing unit 31 and electronic mail processing unit 25, and a user input unit 30 composed of input devices, such as a keyboard, a mouse and the like.

A network 40 is used to reciprocally connect a multimedia server 10 and a client 20 using a TCP/IP protocol.

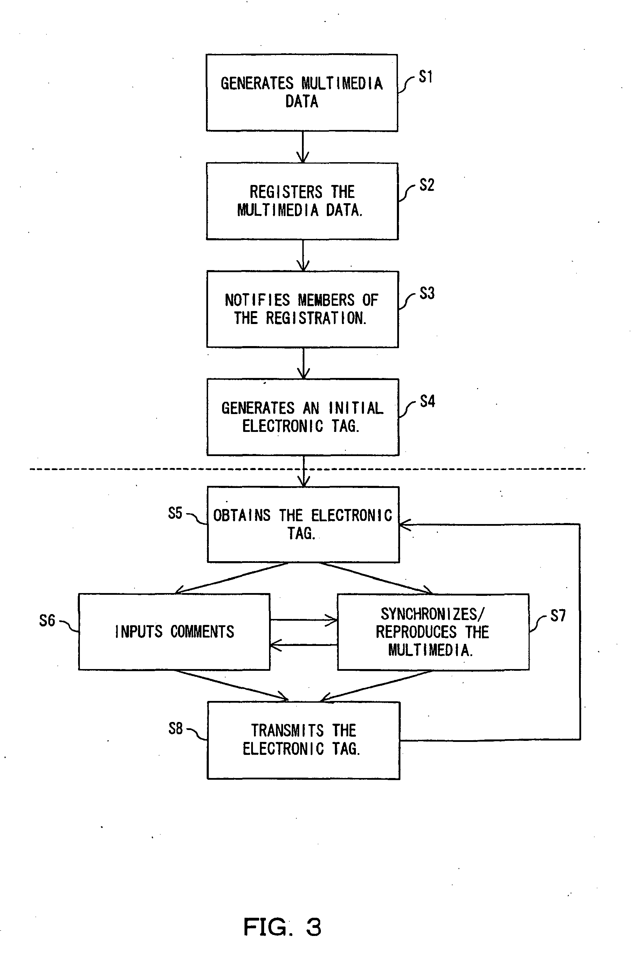

Fig. 3 is a flowchart showing the operation of the entire multimedia cooperative work system shown in Fig. 2.

In Fig. 3, first, the multimedia generation process in step S1 is described below.

First, in an arbitrary client 20, multimedia-data (in this specification, in particular, the AV data described above, including a time factor, such as dynamic image data) are generated, based on image data taken by the camera 23 shown in Fig. 2. It does not necessarily mean that the camera 23 must be used together with a client system at the time of photographing. It is acceptable even if data are taken only by the camera 23 and the camera 23 is connected to the client 20 at the time of multimedia registration. Alternatively, dynamic image data are stored in a storage medium which can be freely attached to/removed from the camera 23 and this storage medium can be connected to the client 20 later. For a specific connection method, for example, a DV (digital video) method and the like is used. However, the connection method is not limited to this method.

Next, the multimedia registration process in step S2 is described below.

The client 20 transmits the multimedia data generated in step S1 to the server 10 through the network 40 using the multimedia communication unit 22, for example, in response to a user's registration request.

In the server 10, multimedia data received through the multimedia communication unit 16 is stored in the multimedia storage device 13. Although for a specific transmission method, an HTTP protocol, etc., is used, the method is not limited to this.

In the server 10, after the reception/storage of multimedia data are completed, an identifier is assigned to the multimedia data. Then, the multimedia communication unit 16 returns the identifier of the stored multimedia data to the multimedia communication unit 22 of the client 20, for example, using an HTTP protocol. This multimedia identifier is, for example, composed of a communication protocol, a server name and a file name. In this example, it is assumed that an identifier of, for example, http://www.mediaserv.com/data 1.mpg is assigned.

The multimedia communication unit 16 of the server 10 generates a new entry in the management information DB 14.

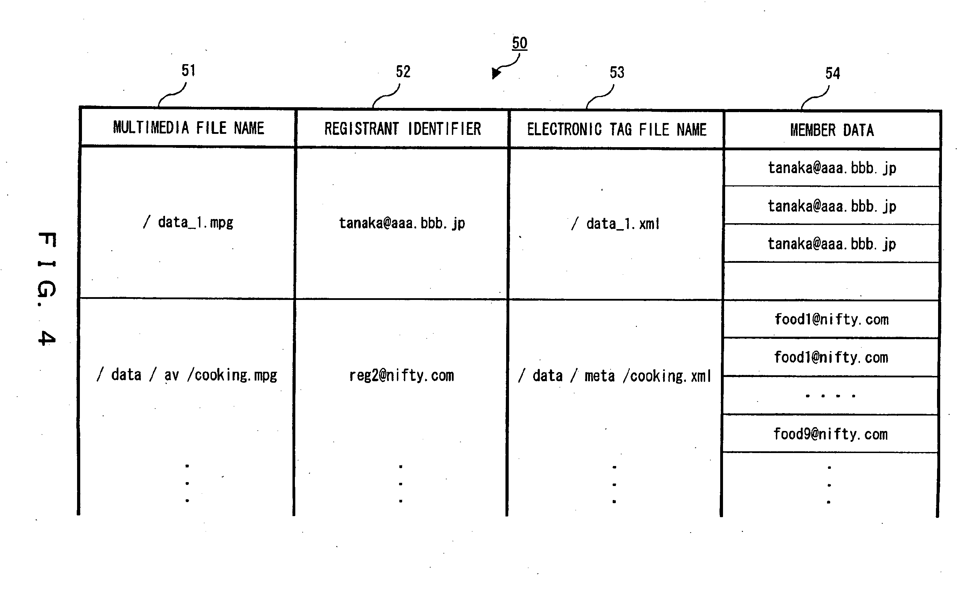

Fig. 4 shows the internal data format of the management information DB shown in Fig. 2.

In Fig. 4, an entire table storing data is represented by 50.

This table 50 is composed of the entries of the multimedia file name 51, registrant identifier 52, electronic tag file name 53 and member data 54.

In the entry of the multimedia file name 51, the file name of the multimedia data stored in the multimedia storage device 13 shown in Fig. 2 (the multimedia identifier) is stored. In this example, the file name "/data_1.mpg" and the like of the example identifier are shown.

In the entry of the registrant identifier 52, the identifier of a client that registers the multimedia data, is stored. Although in this example, this is an electronic mail address, the identifier is not limited to this.

In the entry of the electronic tag file name 53, the file name of a multimedia electronic tag corresponding to the multimedia data (the meta-information of the multimedia data) stored in the electronic tag storage device 14 shown in Fig. 2, is stored.

In the entry of the member data 54, the client identifier of a user sharing the multimedia data and multimedia electronic tag data, is stored (Although in this example, this is the electronic mail address of each client, the identifier is not limited to this).

In the process of step S2, in the entry 51 "multimedia file name" shown in Fig. 4, the identifier assigned to the stored multimedia is inputted. In the entry 52 "registrant identifier", the client identifier (email address and the like) of a user (the user in Step S1) that makes a request for registering the multimedia data, is inputted. The storage of the multimedia electronic tag file name 53 and member data 54 are described later in the processes of steps S3 and S4.

Next, the member notification process in step S3 is described below.

After making the server 10 perform multimedia registration and receiving the identifier, a user in the client 20 notifies each member (the users of other clients 20) by electronic mail of the fact that multimedia is registered in a server. This member is another user with which the user making a registration request wants to exchange a comment on the multimedia data. Comment exchange means to freely exchange opinions on an arbitrary multimedia data through a network, such as to attach a comment to an arbitrary scene of multimedia data, which is described later, and to further attach a comment to another person's comment from time to time.

In this case, electronic mail embedding the multimedia identifier received by the multimedia communication unit 22 in step S2 is notified.

The electronic mail is transmitted to the client 20 of each member through the mail server 17 of the server 10.

In this case, in the server 10, the electronic mail address of the member described in the destination field data of the electronic mail that is stored in the mail server 17 is extracted and the embedded multimedia identifier described above is also extracted from the mail body. Then, the electronic mail address and multimedia identifier are registered in the management information DB 14. Specifically, the management information DB 14 is retrieved using the extracted multimedia identifier (or the destination field data of the electronic mail) as a key, and the electronic mail address of each member (and a transmitter) is inputted to the entry 54 "member data" corresponding to the corresponding entry 51 "multimedia file name" (although not shown in Fig. 4, a real name can also be inputted).

Next, the initial electronic tag generation process in step S4 is described below.

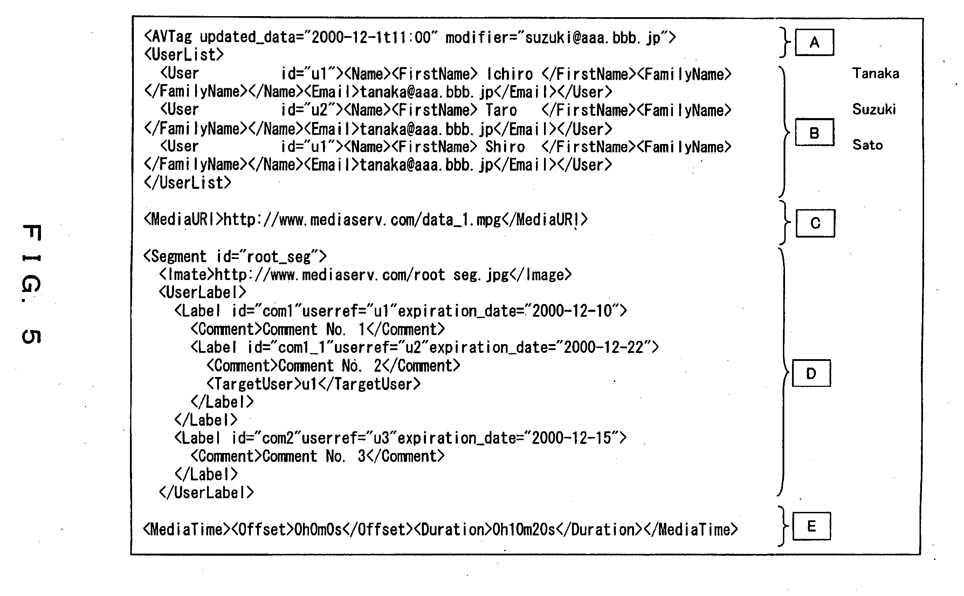

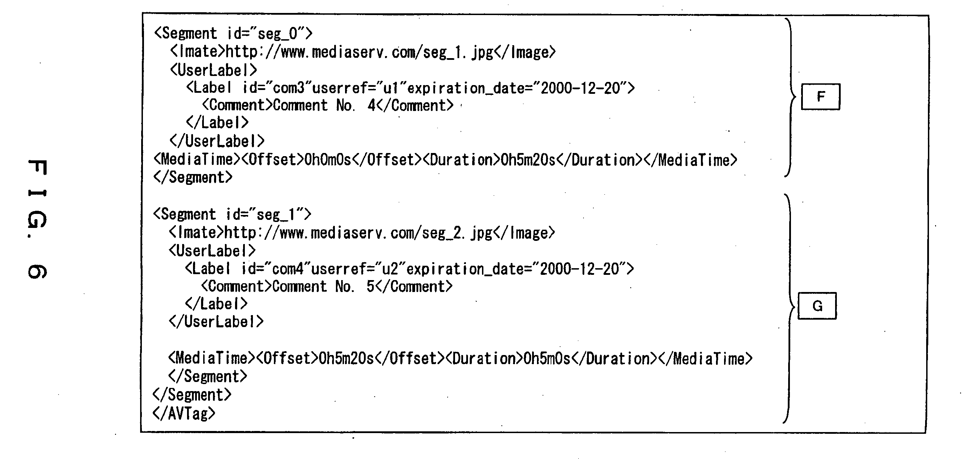

In the multimedia server 10, after the electronic mail is transferred, the initial electronic tag generation unit 11 generates the model of a multimedia electronic tag, based on both the information obtained in step S3 and the multimedia data stored in step S2, and the electronic tag storage device 12 stores the model. This model is one provided with no comment, of the multimedia electronic tags shown in Figs. 5 and 6, which is described later.

The initial electronic tag generation unit 11 is not automated so a person generates the model of the multimedia electronic tags using an existing editing device. In this case, the multimedia identifier 51 and member data 54 are read from the management information DB14, and also the entity of a multimedia data (AV data) corresponding to the multimedia identifier 51 read from the management information DB 14 is read from the multimedia storage device 13. All the three pieces of data are inputted to the initial electronic tag generation unit 11 and are used to generate the model of a multimedia electronic tag.

Although the model of a multimedia electronic tag is described with reference to a specific example of the multimedia electronic tag shown in Figs. 5 and 6, which is described later, a scene cutting method needed to generate segment data (to divide the entity of multimedia data into a plurality of scenes in terms of time and to manage the scenes in tree-shape structure) is assumed to be publicly known. Specifically, for this method, MPEG-7 (ISO/IEC 15938), which is currently being standardized by ISO/IEC, is used. The formal name of MPEG-7 is "Multimedia Content Description Interface". MPEG-7 realizes the description of the internal structure (time sequence) of multimedia data, that is, the description of information of each scene which is obtained by dividing the multimedia data (description on when (what hour what minute what second) each scene starts at and when (what hour what minute what second) the scene ends).

Then, the intra-server identifier of a newly generated multimedia electronic tag is assigned to the model of a multimedia electronic tag and the model is linked to the identifier of the multimedia data. Then, the model is stored in the management information DB 14. Specifically, the electronic tag storage device 12 stores/manages the data of the generated multimedia electronic tag model (initial electronic tag). An identifier is assigned to this initial electronic tag. This electronic tag identifier is transmitted to the management information DB 14 and is inputted to the corresponding entry 53 "electronic tag file name".

After the processes in steps S1 through S4 are completed, each user (including a registrant) can refer to each comment, can attach a desired comment to an arbitrary scene at a desired time and can also attach a comment to a comment. In this way, a dynamic image with a comment that varies depending a scene can also be viewed. Processes for realizing such a user service (steps S5 through S8) are described below.

First, the electronic tag acquisition process in step S5 is described.

Each user of another client 20 knows that the corresponding electronic tag is available by receiving the electronic mail in the process of above step S3, including information about the multimedia identifier.

In the client 20, if, for example, the user makes a request for using an electronic tag, the electronic tag communication unit 24 issues a request to the electronic tag communication unit 15 of the multimedia server 10 for a multimedia electronic tag (for example, using an HTTP protocol) using the multimedia data identifier described in the electronic mail received in step S3 as a key.

The electronic tag communication unit 15 of the multimedia server 10 makes an inquiry to the management information DB 14 for the identifier of the corresponding multimedia tag data, based on the received multimedia data identifier and reads multimedia electronic tag data from the electronic tag storage device 12, using the obtained identifier. Then, the unit 15 transmits the multimedia electronic tag data to the client, for example, using an HTTP protocol. In this case, if the requesting client is not registered in the management information DB 14, the request can also be refused.

In the requesting client 20, the obtained multimedia tag data are stored in the electronic tag buffer 28.

It is acceptable if, for example, multimedia electronic tag data obtained by this client attaching a comment can also be directly transmitted from the client using, for example, an HTTP protocol.

Next, the comment input process in step S6 is described below.

The user of another client 20 can add his/her comment to an obtained multimedia electronic tag, as necessary. For this purpose, the electronic tag editing unit 31, display unit 29, and user input unit 30 are used. The editing result is stored in the electronic tag buffer 28.

This process is described in detail later with reference to Figs. 5, 6 and 7.

Next, the multimedia synchronous reproduction in step S7 is described below.

On each client 20 sides, a comment described in a multimedia electronic tag can be synchronized with a multimedia and be displayed, as necessary. For this purpose, both the format conversion device 26 and multimedia synchronous reproduction unit 27 are used.

The format conversion device 26 converts the format of a multimedia electronic tag stored in the electronic tag buffer 28, for example, into the SMIL (Synchronized Multimedia Integration Language) of W3C standard (the conversion method is described later). The format conversion device 26 is, for example, an XSLT (Extensible Style Language Translator) processing system stipulated by W3C.

The multimedia synchronous reproduction unit 27 is, for example, an SMIL player, and synchronizes /reproduces multimedia data and comments thereof using time control data described in a multimedia electronic tag, the format of which is converted into SMIL by the format conversion device 26 in response to a user's synchronous reproduction request. The reproduction result is displayed in the display unit 29.

The multimedia communication unit 22 obtains the multimedia data by communicating with the multimedia communication unit 16 of the server 10.

More specifically, the multimedia communication unit 22 of the client 20 notifies the multimedia communication unit 16 of the server 10 of the "src" attribute (described later) of the tag <video> of the SMIL data inputted to the multimedia synchronous reproduction unit 27 as a multimedia identifier.

The multimedia communication unit 16 of the server 10 extracts the corresponding multimedia data from the multimedia storage device 13 using the multimedia identifier, and transmits the multimedia data to the multimedia communication unit 22 using, for example, an HTTP protocol.

Each of a specific example of a multimedia electronic tag, the format of which is converted into SMIL by the format conversion device 26 and a specific example of the synchronous reproduction of multimedia data and comments thereof using the multimedia electronic tag is described later.

Lastly, the electronic tag transmission process in step S8 is described below.

The electronic tag communication unit 24 transmits the multimedia electronic tag, the content of which has been updated by a user adding comments and the like in the comment input process in step S6, to the electronic tag communication unit 15 of the server 10 together with the corresponding multimedia identifier (described in the electronic tag). Since, once receiving a multimedia electronic tag, each user can identify the identifier of the multimedia electronic tag, this electronic tag identifier can also be directly designated.

An electronic tag identifier can be obtained in the same way as in the electronic tag acquisition process in step S5, and the multimedia electronic tag data are stored in the electronic tag storage device 12.

Alternatively, a multimedia electronic tag modified by a user can also be directly distributed to other members instead of distributing it through the server 10, as necessary.

Next, it is assumed that a plurality of users perform the comment input/addition process shown in step S6, using the multimedia electronic tag model generated by the processes in step S1 through S4. Figs. 5 and 6 show a specific example of a multimedia electronic tag in this case. The electronic tag transmission process is described in more specific detail below with reference to Figs. 5 and 6.

A multimedia electronic tag is, for example, described in XML (Extensible Markup Language), as shown in Figs. 5 and 6. This is just one example, and the language is not limited to XML.

Figs. 5 and 6 show the entire description of one multimedia electronic tag, which is divided into two portions for convenience' sake and each of the two portions is shown in Figs. 5 and 6.

The manager and the like of the multimedia server 10 side can basically determine the description of each tag described below arbitrarily. It is also assumed that the meaning (structure) of each tag described below is determined by the manager and the like of the multimedia server 10 side and is defined in DTD (Document Type Definition), which is not shown in Figs. 5 and 6.

A multimedia electronic tag is largely composed of the following four descriptions (a) through (d).

### (a) URL of multimedia entity

### (b) Member data

A variety of information (name, electronic-address, etc.) about users permitted to participate in the events (commenting, editing, opinion exchange, etc.) of a multimedia

### (c) Description on the time sequence of multimedia data

Multimedia data are divided into time blocks (scenes) and the information of each scene is described. This described content is composed of the time data of all the scenes (offset from top, scene time, etc.). In order to collectively handle a plurality of scenes consecutive in terms of time as a high-order scene, description on scene data can also include description on a low-order scene or reference data about the scenes.

### (d) Description of a user comment

Each user comment is configured so that the entity or reference data can be attached to the description on scene data. A user comment is comprised of a comment entity (which is also comprised of text, icons, static images, etc.), comment writer data (name, mail address, etc.) or reference data about comment writer data, reference data about a referred comment (information indicating the original comment to which a comment is made), comment time data (preparation date, expiration date, etc.) and comment publication scope data (publication is limited to special members). Of these items, a plurality of pieces of information except for the comment entity are called "(comment) attribute data".

Basically each client has the multimedia electronic tag browser function and comment input operation function. In particular, using the input operation function, a user can input the addition destination scene, addition destination comment, publication scope, time data (expiration date, etc.). Using the browser function, the time data of each comment and the current time can be compared and only valid (non-overdue) comments can be displayed. Alternatively, the server 10 can also be provided with a function to delete overdue comments from a multimedia electronic tag.

When transmitting a multimedia electronic tag to a client, the multimedia server 10 can compare the user identifier of a client with comment publication scope data for each comment, and can transmit only comments, the publication of which is permitted.

Detailed descriptions of the multimedia electronic tags shown in Figs. 5 and 6 are given.

In Fig. 5, portion A is route tag <AVTag> declaring that this XML document is a multimedia electronic tag. This route tag has an "updated_date" attribute indicating the latest modification date (date when this XML document has been modified last) and a "modifier" attribute indicating the intra-system identifier of the modifier (in this example, electronic mail address). In the example shown in Fig. 5, a user, Suzuki@aaa.bbb.jp has modified the content of the XML document at 11 o'clock, December 1, 2000.

Portion B is a tag aggregate indicating member data. Tag <UserList> at top is a "wrapper" used to describe member data.

Tag <User> is used to describe individual member data, and has an "id" attribute used to refer to member data in another place of the XLM document. An individual "id" attribute value shall be unique in an XML document. In the example shown in Fig. 5, as this "id" attribute of member data, id="u1", id="u2", and id="u3" are assigned to Ichiro Tanaka, Taro Suzuki, and Shiro Sato, respectively.

Tag <Name> is used to describe the name of a user. A first name and a family name are described in tags <FirstName> and <FamilyName>, respectively. Although a family name and a first name must not always be described separately, in this example, they are separated in relation to an example display, which is described later, (in which only a family name is displayed) . Therefore, only the family name of a user, only the first name or both the family and first names can be described using only tag <Name>.

Tag <Email> is used to describe a user identifier in the system (in this example, electronic mail address).

The contents of tags <User> and <Email> are described referring to the member data 54 in the management data DB 14 in the process of step S4 shown in Fig. 3 (generation of a multimedia electronic tag model). In the example shown in Fig. 5, it is a multimedia electronic tag corresponding to a multimedia identifier=http://www.mediaserv.com/data 1.mpg, and the corresponding member data 54 in Fig. 4 is obtained in this way. As a result, the real member names of Ichiro Tanaka, Taro Suzuki and Shiro Sato, and their electronic mail addresses are described.

Portion C is tag <MediaURI> used to describe a multimedia identifier corresponding to the multimedia electronic tag. In this example, the corresponding multimedia is a file name, "data_1.mpg" (MPEG-1 dynamic image) that is stored in a server, www.mediaserv.com, and it means that it can be obtained using an HTTP protocol. This is also described in the model generation of the process in step S4 using the information of the multimedia file name 51 in the management information DB 14.

Portion D is composed of tag <Segment> describing the highest-order segment in the time sequence of multimedia data (id of the segment="root_seg") and user comments attached to the highest-order segment. User comments are not described in the model generation step.

Tag <Image> is used to describe the URL of the representative image of an attached segment. When a multimedia electronic tag is displayed in the client 20 for comment input, representative image data are obtained from the server 10 and are displayed using, for example, an HTTP protocol

Tag <UserLabel> is the "wrapper" of a comment attached to this segment. Each comment is described using tag <Label>.

Tag <Label> has an "id" attribute indicating a comment identifier, a "userref" attribute indicating the reference of a comment writer (the reference destination of which is stored in tag <UserList>) and an "expiration_date" attribute indicating the expiration date of a comment.

In the comment identifier, for example, the "id" attribute of "comment No. 2" is id="com_1". This indicates that "comment No. 2" is comment relation to the comment of id="com1" (the comment of "comment No. 1"). This is just one example, and description on "id" attribute is not limited to this example.

Tag <Comment> is used to describe a specific comment content (in a text format). Although in Fig. 5, it is described "comment No. 1", "comment No. 2" and the like, in reality, some comment sentences inputted by each user are described.

Although in this example, a comment content is in a text format, the format is not limited to text. For example, icon data (entity or referrer) and the like can be used.

In this case, at the time of the generation of the multimedia electronic tag model shown in step S4, tags <Label> and <Comment> are not described. These portions will be added and updated every time a user attaches a comment in each client 20.

At the time of the model generation, tags <Segment> and <Image> are described, and tag <UserLabel>, which is a comment "wrapper", is set.

For example, in the example shown in Fig. 5, although the URL of a representative image=http://www.mediaserv.com/root seg.jpg is described in tag <Segment>, for example, in steps S1 and S2, the user of a client requesting the registration of multimedia data arbitrarily determines this representative image (a static image extracted from multimedia data) and transmits the representative image to the server 10 together with the multimedia data. Then, the server 10 assigns an identifier (URL, etc.) to this representative image file. Although the process also applies to a representative image in a low-order segment, which is described later, in that case, a user instructs the server 10 how to divide multimedia data and also selects a representative image for each divided scene. Then, the user also transmits information indicating which scene each representative image represents, to the server 10 together with the multimedia data.

Alternatively, at the time of the process of step S4, for example, the operator of the server 10 can refer to multimedia data (dynamic image) read from the multimedia storage device 13 and can arbitrarily select a screen (static image) that should become a representative image. Then, the operator can arbitrarily determine the file name (URL) of this static image.

In this case, the operator also arbitrarily specifies the time sequence (tree-shape structure) of the multimedia data as in tag <Segment>, and the low-order segment (descriptions in portions F and G, which are described later).

Tag <TargetUser> is an optional tag. A default state where there is no tag <TargetUser> (specifically, a comment with the "id" attribute of "com1" and "com2" in portion D) means that this comment should be made public to all members.

If users to which multimedia data should be made public are designated by tag <TargetUser> like a comment with the "id" attribute of "com1_1" in portion D, it means that this comment data should be transmitted to only the users. In this example, it means that the comment with the "id" attribute of "com1_1" (comment No. 2) is directed to only a member, the member data "id" attribute of which is id="u1", that is, Ichiro Tanaka.

The electronic tag storage device 12 stores in advance, for example, a multimedia electronic tag, including such tag <TargetUser>. In response to a user's request, the electronic tag communication unit 15 of the multimedia server 10 transmits this entire multimedia electronic tag to users Tanaka (publication destination user) and Suzuki (comment writer), and transmits a multimedia electronic tag without "comment No. 2" to user Sato.

When a client directly transmits an edited multimedia electronic tag to another client (in this example, if the client of user Suzuki transmits the multimedia electronic tag shown in Fig. 5 to users Tanaka and Sato), the electronic tag communication unit 24 of the client of user Suzuki transmits the multimedia electronic tag shown in Fig. 5 to the multimedia server 10 and the client of user Tanaka without deleting "comment No. 2". However, the electronic tag communication unit 24 transmits the multimedia electronic tag shown in Fig. 5 without "comment No. 2".

Portion E is a tag aggregate used to describe the time data of a segment "root_seg". Tag <MediaTime> at top is a "wrapper". Tag <Offset> indicates the start time of a segment (offset from the beginning of data). In this example, it indicates that the start time of the segment is the beginning of data (that is, offset is 0). Tag <Duration> indicates the time length of a segment. In this example, it indicates that the time length is 10 minutes 20 seconds.

The description of F portion, G portion, etc., shown in Fig. 6 follows the description of the E portion shown in Fig. 5.

In Fig. 6, each of F portions and G is tag <Segment> describing one of two low-order segments, included in the highest-order segment "root_seg" (the respective "id" attributes of the segments are id="seg_0'" and id="seg1) and a user comment attached to the respective two segments, respectively. In other words, they are a description off each scene obtained by dividing multimedia data in terms of time and a description on a user comment attached to each scene, respectively. In the example shown in Fig. 6, they indicate that the multimedia data have two layers and the number of the second layer is two.

Such a hierarchical structure is indicated by a range relation specified in each tag <Segment> (so-called "nest relation"). Specifically, the start tag of the highest-order segment "root_seg" is described at the top of portion D, and an end tag (/Segment) is described below portion G (immediately above tag </AVTag> that is described last). Other tags <Segment> described between the start and end tags are low-order segments, as shown in Fig. 6.

Therefore, in order to generate a further lower-order segment below the first low-order segment (to generate three-layer structure), it is acceptable if a new tag <Segment> is described between the start tag (<Segment id="seg_0">) and end tag (</Segment> described at the end of portion F).

As shown in Figs. 5 and 6, the relation between comments can also be expressed by so-called "parentage" and "brotherhood".

Since the descriptive method of tags <Segment> in portions F and G is basically the same as that of the highest segment "roor_seg" in portion D, it is only briefly described here.

First, as described in a tag aggregate (tags <MediaTime>, <Office> and <Duration>) used to describe time data described near the tail, the segment of a segment id="seg_0" in portion F (hereinafter called the "first low-order segment) indicates that the first low-order segment starts from data top (offset is "0h0m0s") and has the time length of 5 minutes 20 seconds.

Similarly, as described in the tag aggregate used to describe time data, the segment of a segment id="seg_{_}1" in portion G (hereinafter called the "second low-order segment) indicates that the second low-order segment starts from a point 5 minutes 20 top (offset is "0h5m20s") seconds away from the beginning of data and has the time length of 5 minutes (in other words, the second low-order segment covers a time range between 5 minutes 20 seconds and 10 minutes 20 seconds).

In the example shown in Fig. 6, there is no time overlapping between two low-order segments, and time range covered by them is the same as that of a parent segment (in this case, the highest-order segment). However, this is just one example, and the setting is not limited to this. As described above, the operator and the like of the server 10 can determine what is the time range, how many low-order segments should be provided, or how many layers the hierarchy should have, arbitrarily (or based on the requesting user's desire).

As described above, in the example shown in Fig. 6, the URL of the representative image of the first and second low-order segment are http://www.mediaserv.com/seg 1.jpg and http://www.mediaserv.com/seg 2.jpg, respectively.

"Comment No. 4" and "comment No. 5" are attached to the first and second low-order segment, respectively. Therefore, as described above, "comment No. 4" is displayed while multimedia data are reproduced between top and 5 minutes 20 seconds, and "comment No. 5" is displayed between 5 minutes 20 seconds and 10 minutes and 20 seconds. "Comment No. 1" through "comment No. 3" are always displayed while multimedia data are reproduced, since they are attached to the highest segment.

In this way, according to the present invention, a comment can be attached to the entire multimedia data or an arbitrary one of the scenes obtained by dividing multimedia data in terms of time (or another comment). A comment writer name, a comment generation date, a comment destination (to which scene or whose comment a comment is attached) and the like can also be displayed.

Furthermore, a specific example of the comment display/input screen is described below.

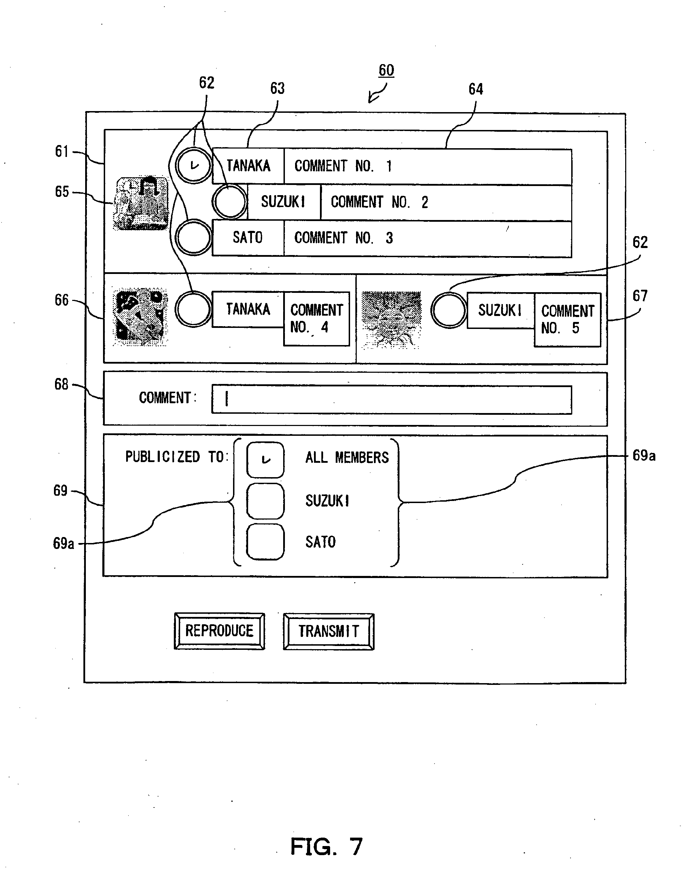

Fig. 7 shows one example of the comment list display/comment input screen of a multimedia electronic tag displayed in each client. A case where the server 10 receives and displays a multimedia electronic tag with the contents shown in Figs. 5 and 6 is shown. It is assumed that each client 20 is provided with a browser function to display an XML document (there is such an existing tool). It is assumed that as in a prior art, a screen, including buttons and a comment input column as shown'in Fig. 7 is displayed, which is not shown nor described in Fig. 7 and are not described, using an HTML document specifying the display format, XSL (XSLT) and the like. In the example, it is assumed that the format of a multimedia electronic tag received from the server 10 is converted into a prescribed display format by the electronic tag editing unit 31 shown in Fig. 2, and a screen as shown in Fig. 7 is displayed by the display unit 29.

In Fig. 7, the entire comment display/input screen is represented by 60.

A high-order segment display area 61 displays comments attached to the highest-order segment and the representative image thereof. Information about the highest-order segment corresponds to a portion beginning with tag <Segment> in portion D shown in Fig. 5.

Buttons 62 are used to designate a target comment to which a new comment is attached. The button 62 is not limited to the example display, and the display format varies depending the content of the HTML document, XSL (XSLT) and the like.

If a user clicks a desired button 62 using, for example, a mouse, the designation of a comment corresponding the button 62 is displayed (in the example shown in Fig. 7, check is marked) and it is interpreted that a new comment inputted to a comment input area 68, which is described later, corresponds to a comment to be attached to the comment designated by the button 62. Then, the corresponding description is attached to the multimedia electronic tag. In this way, the content of a multimedia electronic tag continues to be updated every time a new comment is attached. In the example shown in Fig. 7, it means that a new comment is attached to "comment No. 1" given by user Tanaka.

The name of a comment writer is represented by 63. This is generated using the "userref" attribute of tag <Label> in portion D and information about tag <Name> in portion B that are shown in Fig. 5 (although in this example, only a family name is displayed using information about tag <FamilyName> and not using information about tag <FirstName>, it is not limited to this).

In this example, a comment writer name is displayed as one example of the comment attribute data, and attribution data is not limited to this. Therefore, for example, a comment generation date and the like can also be displayed instead.

The content of a comment is represented by 64. This is generated using the information of each tag <Comment> in portion D shown in Fig. 5.

Each of 62, 63 and 64 is generated for each comment, and they are displayed in their addition order from top to bottom on the screen. As shown in Figs. 5 and 6, a comment on a comment is indented and displayed. In the example shown in Fig. 7, it is indicated that on user Suzuki's comment "comment No. 2" is attached to user Tanaka's comment "comment No. 1".

An image 65 is a representative image attached to a segment. The display image is reproduced using data referenced using an URL described in tag <Image> in portion D shown in Fig. 5.

Display areas 66 and 67 display the comment contents of the low-order segments (first and second low-order segments) of a segment "root_seg" described in the respective tags <Segment> in portions F and G. The structure is the same as that of the display area 61 of a high-order segment. Each of the areas 66 and 67 displays the representative image of each low-order segment and the comment thereof. Each of the areas 66 and 67 also displays a comment on a comment like the high-order segment display area 61.

The respective display positions of the areas 66 and 67 are below the high-order segment display area 61 in the example shown in Fig. 7. If there are a plurality of low-order segments, they shall be displayed from left to right in time sequence order.

In order to attach a comment to each segment instead of a comment in the high-order segment display area 61, display area 66 and display area 67, it is acceptable, for example, if an area where the representative image is displayed is clicked using a mouse and the like.

In a comment input area 68, a user viewing the comment display/input screen 60 attaches a new comment to the designated segment or comment after designating a desired segment or comment in the high-order segment display area 61, display area 66 or display area 67.

In a publication user designation area 69, the publication destination of a newly attached comment is selected and inputted. Selection buttons and the name of each member are represented by 69a and 69b, respectively. If a user clicks a desired button 69a using, for example, a mouse and the like, the selection is displayed (in the example shown in Fig. 7, check is marked) and the selection result is reflected (specifically, if a specific user is designated as the publication destination, tag <TargetUser> shown in Fig. 5 is attached to the newly attached comment). In the example shown in Fig. 7, all-member publication is selected and no tag <TargetUser> is attached.

A "send" button 70 is used to start an operation to transmit an edited multimedia electronic tag to a multimedia server or client.

A "reproduce" button 71 is used to start an operation to synchronize/reproduce an edited multimedia electronic tag and the corresponding multimedia.

If this "reproduce" button is designated, the format conversion device 26 converts the format of a multimedia electronic tag into a multimedia synchronous reproduction format.

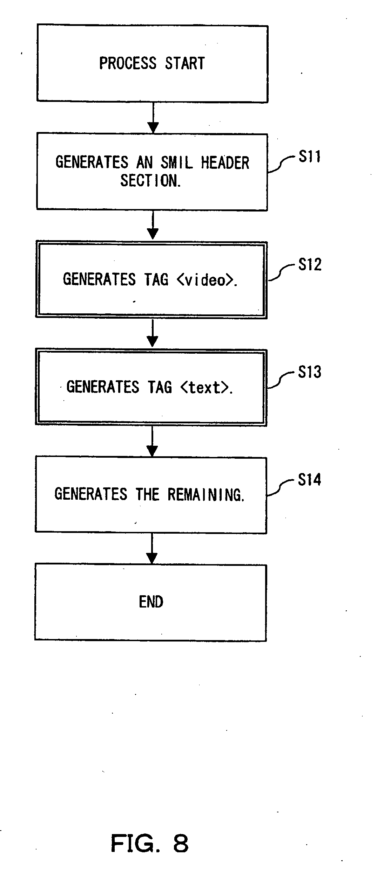

The process operation of this format conversion device 26 is described below with reference to Figs. 8 through 13.

In this example, it is assumed that this conversion into a multimedia synchronous reproduction format is performed by SMIL format conversion.

Fig. 8 is a flowchart showing the summary of the entire SMIL conversion process.

First, portions A and B of a multimedia electronic tag shown in Fig. 5 are outputted (step S11). The contents are fixed.

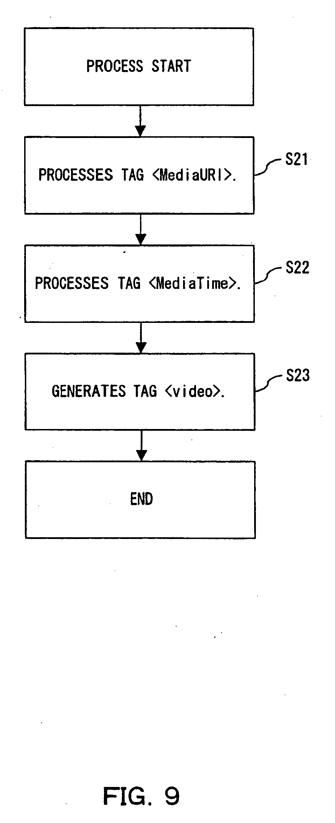

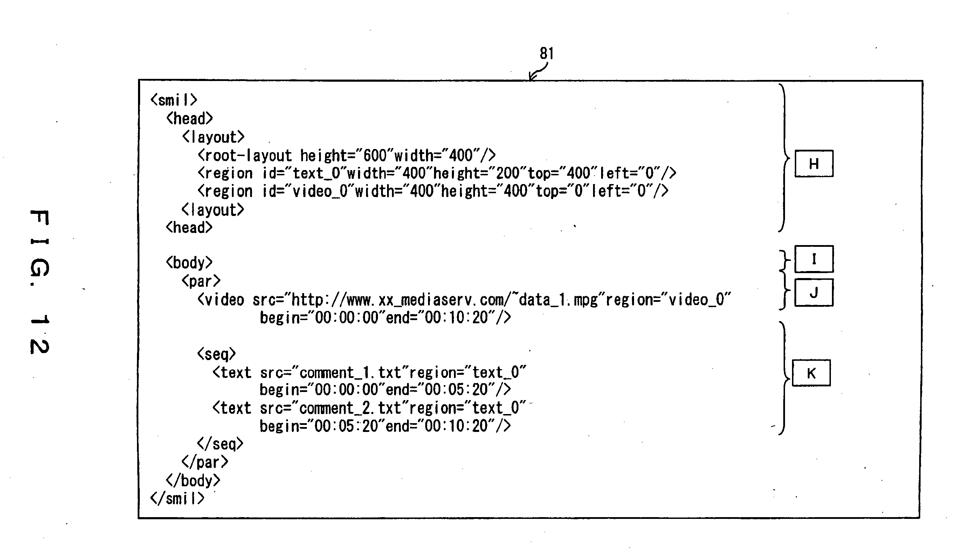

Then, portion J (tag <video>) shown in Fig. 12, which is described later, is generated/outputted (step S12). The details of this process are described later with reference to Fig. 9.

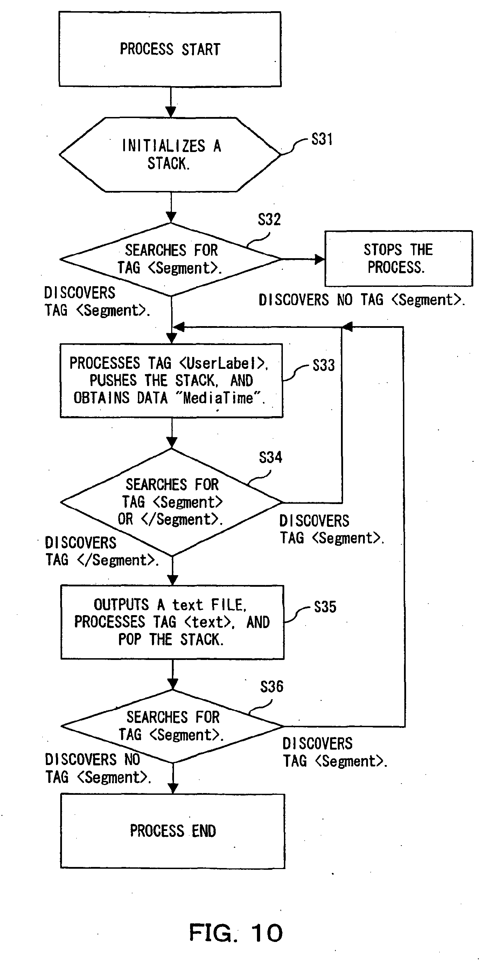

Then, portion K (tag <text>) shown in Fig. 12, which is described later, is generated/outputted (step S13). The details of this process are described later with reference to Fig. 10.

Lastly, the remaining portions are outputted (step S14). The contents are fixed.

Fig. 9 is a flowchart showing the detailed process in step S12 of Fig. 8.

In Fig. 9, first, tag <media URI> is retrieved from a conversion source file (multimedia electronic tag) and the information (URI of the multimedia data) is obtained. Then, the "src" attribute of tag <video> is generated (step S21).

Since in the example shown in Fig. 5, the URI of the multimedia data is http://www.mediaserv.com/data 1.mpg as shown in portion C, the "src" attribute of tag <video> becomes as shown in portion J of Fig. 12.

Then, the tag <MediaTime> of the highest-order segment (tag <MediaTime> of portion E shown in Fig. 5) is retrieved, and the values of "begin" attribute (Offset data) and "end" attribute (a value obtained by adding the value of tag "Duration" to the value of tag "Offset") of tag <video> are generated using the information of tags <Offset> and <Duration> of tag <MediaTime> (step S22).

Lastly, tag <video> is completed by adding the value (fixed) of "region" attribute (in the example shown in Fig. 12, region="video_0") to each of the attribute values (step S23).

Fig. 10 is a flowchart showing the detailed process in step S13 shown in Fig. 8.

First, a stack temporarily storing comment data, which is not shown in Fig. 10, is cleared (initialized) (step S31).

Then, tag <Segment> is retrieved from the top of an electronic tag (step S32). If tag <Segment> is discovered; the process proceeds to step S33. If tag <Segment> is not discovered, the electronic tag is not legal. Therefore, the process is stopped.

In step S33, first, comment data are generated based on information of tag <UserLabel> appearing immediately after the discovered tag <Segment>. A comment character string is obtained from tag <comment> in each tag <Label> of tag <UserLabel>, and the family name of a user is obtained from "userref" attribute, and the tags <Name>/<FamilyName> of tag <UserLabel>. Then, a final comment character string is generated by combining the comment character string and the family name. If tag <Label> is included in another tag <Label>, a plurality of blanks are inserted in the top of the comment character string depending on the depth (nesting stage). The comment character string obtained in this way (for the number of tags <Label>) are "pushed" into the stack, as comment information. In order to separate the comment from the comment of another layer (in order to separate the comment from a comment obtained by applying the process in step S33 to a low-order segment that is discovered in the process in steps S34 or S36, which are described later), a character string for separation, such as "------" is additionally "pushed" into the stack.

Lastly, the content of tag <MediaTime> appearing immediately after tag </UserLabel> (tags <Offset> and <Duration>) is stored.

Then, tag <Segment> or </Segment> is retrieved from the current position in the direction of the file tail (step S34). If tag <Segment> is discovered (there is a low-order segment), the process returns to step S33. If tag </Segment> is discovered, the process proceeds to step S35.

In step S35, first, the current stack content is stored in a file. The file name is assumed to be unique. Then, tag <text> is generated based on the file name and the content of the stored tag <MediaTime>. If there is the "pushed" comment data on the low-order segment, the comment data are discarded as "pop". The boundary between the "pushed" comment data on the low-order segment and the "pushed" comment data on the high-order segment can be recognized by a separation character string, such as "-----" described above.

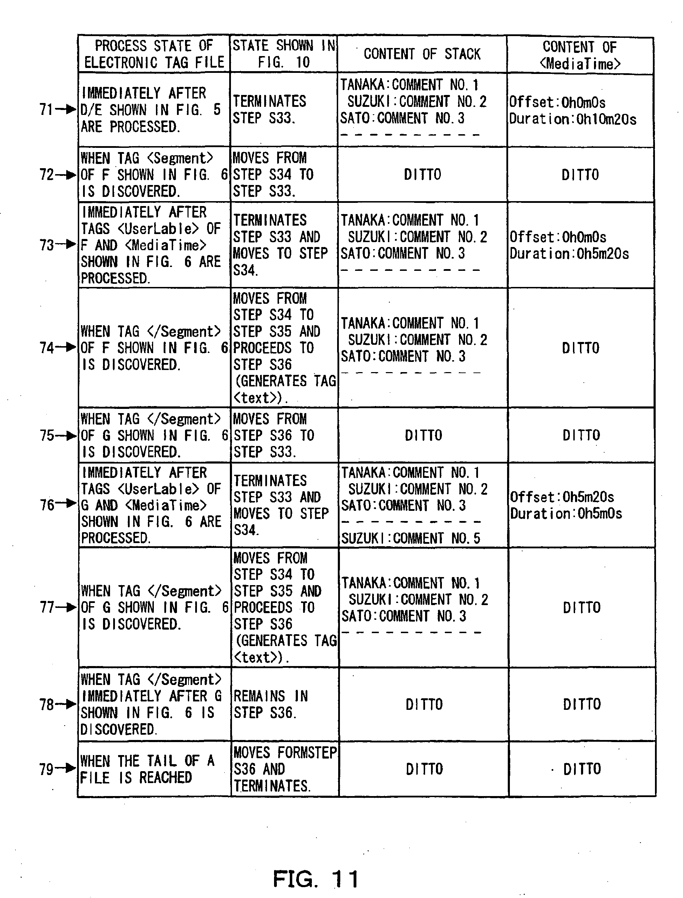

The details are described later with reference to a specific example shown in Fig. 11.

Then, in step S36, tag <Segment> is retrieved from the current position in the direction of the file tail. If tag <Segment> is discovered, the process moves to step S33. If tag <Segment> is not discovered, the process is terminated.

Fig. 11 shows the transition of the stack and content of the stored tag <MediaTime> that is obtained by applying the process shown in Fig. 10 to the multimedia electronic tag shown in Fig. 5.

First, the first process target in step S33 after the start of the process is the highest segment in portion D shown in Fig. 5.

As shown in portion D of Fig. 5, "comment No. 1". "Comment No. 2" and "comment No. 3" are attached to this highest-order segment, and each of these is sequentially "pushed" into the stack. Lastly, a separation character string, such as "-----", is additionally "pushed" into the stack. As a result, the stack content shown in line 71 of Fig. 11 is obtained.

Since the content of tag <MediaTime> stored lastly in the first step S33 is the same as the described content of portion E shown in Fig. 5, the content becomes as shown in line 71 of Fig. 11.

If the first step S33 is completed and in succession the process in step S34 is performed, the tag <Segment> of portion F shown in Fig.6 (<Segment id="seg_0">) is discovered. Therefore, the process returns to step S33 (line 72 of Fig. 11).

Then, in the second step S33, "comment No. 4" is "pushed" into the stack and the stack content becomes as shown in line 73 of Fig. 11. Since the stored content of tag <MediaTime> is replaced with the content of the tag <MediaTime> in portion F in the first step S33, the content becomes as shown in line 73 of Fig. 11.

Then, in the second step 534, tag </Segment> lastly described in portion F is discovered, the process proceeds to step S35.

In the second step S35, as described above, first, the current stack content (stack content described in line 73 of Fig. 11, that is, "comment No. 1" through "comment No. 4") is stored in a file. The file is assumed to be named "comment_1.txt" in relation to the example shown in portion K of Fig. 12. Then, tag <text> is generated based on the file name and the content of the stored tag <MediaTime>. In this example, tag <text> representing the upper half of portion K shown in Fig. 12 is generated. Specifically, tag <text> in which "src" attribute is the file name "comment_1.txt" and "begin"/"end" attributes are the "Offset" value (0h0m0s), which is the content of the stored tag <Media Time>/this "Offset" value plus "Duration" value (0h5m20s), respectively, is generated ("region" attribute is fixed).

Lastly, the content stored up to the separation character string "-----" of the stack (in this example, only "comment No. 4") is "popped" and discarded from the stack. As a result, the stored content of the stack at the time of the completion of the second step S35 becomes as shown in line 74 of Fig. 11.

Then, since in the second step S36, tag <Segment> in portion G of Fig. 6 ((<Segment id= "seg1">) is discovered, the process returns to step S33 (line 75 in Fig. 11).

Then, in the third step S33, "comment No. 5" is "pushed" into the stack. As a result, the stack content becomes as shown in line 76 of Fig. 11.

The stored content of tag <MediaTime> is replaced with the content of tag <MediaTime> in the portion G. As a result, the stored content becomes as shown in line 76 of Fig. 11.

Then, since in the third step S34, tag </Segment> lastly described in portion G is discovered, the process proceeds to the third step S35.

In the third step S35, as described above, first, the current stack content (stack content described in line 76 of Fig. 11, that is, "comment No. 1" through "comment No. 3" and "comment No. 5") is stored in a file. The file is assumed to be named "comment_2.txt" in relation to portion K shown in Fig. 11. Then, tag <text> is generated based on the file name and the content of the stored tag <MediaTime>. In this example, tag <text> representing the lower half of the portion K shown in Fig. 11. Specifically, tag <text> in which the "src" attribute is the file name "comment_2.txt" and the "begin"/"end" attributes are the "Offset" value (0h5m20s) of the content of the stored tag <MediaTime>/the "Offset" value plus "Duration " value (0h10m20s), respectively, is generated ("region" attribute is fixed).

Lastly, the content stored up to the separation character string "----" of the stack (in this example, only "comment No. 5") is popped and discarded. As a result, the stored content of the stack at the time of completion of step S35 becomes as shown in line 77 of Fig. 11.

Then, if in the third step 536, tag </Segment> described immediately after portion G shown in Fig. 6 (end tag corresponding to the highest-order segment), the entire process shown in Fig. 10 is terminated.

Fig. 12 shows the result of converting the format of the multimedia electronic tag shown in Figs. 5 and 6 into a multimedia synchronous reproduction format (in this example, SMIL format) by the processes described with reference to Figs. 8 through 11.

In Fig. 12, description enclosed by a frame 81 is a SMIL main body.

In Fig. 12, SMIL document declaration by tag <smil> and screen layout designation by tag <layout> are described in portion H. In the example shown in Fig. 12, it is assumed that a text display area "text_0" and a dynamic-image display area "video_0" are declared and the content is predetermined.

Portion I is the top of each synchronous reproduction control data of a dynamic image and text that are described in tag <body>.

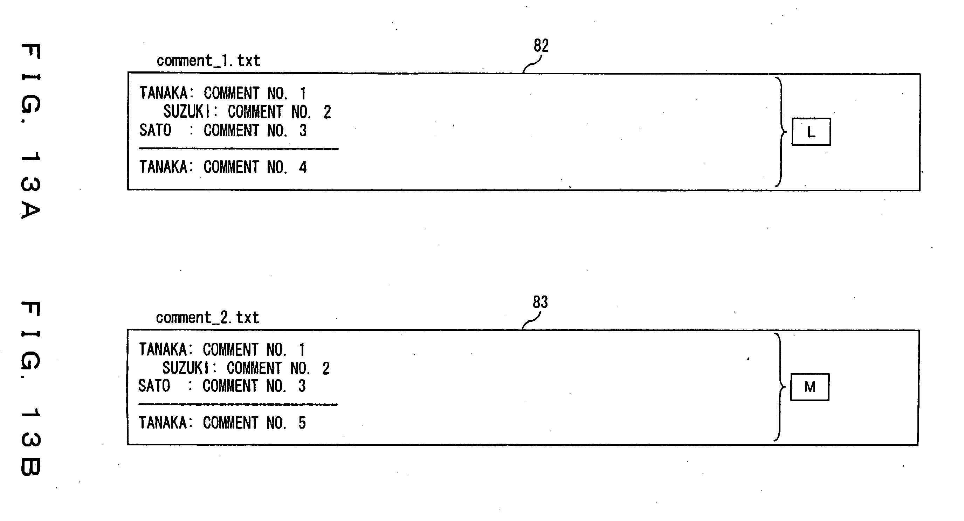

In portion J, first, tag <par> means to reproduce an object in parallel (to simultaneously reproduce a plurality of objects with a different display area). Tag <video> declares a dynamic image object (comment). "Src" attribute, "region" attribute, "begin" attribute and "end" attribute describe the URL of a dynamic image (including voice), a plot position, a reproduction start time and a reproduction end time, respectively. In K portion, tag <seq> means to reproduce an object in series (to sequentially reproduce a plurality of objects with the same display area in terms of time). Tag <text> declares a text object (comment). The meaning of the attribute is the same as that of tag <video>. "Comment_1.txt" and "comment_2.txt" are files generated in the course of a multimedia electronic tag conversion process, as described above, and the contents of the files are shown in portions enclosed by frames 82 and 83 in Fig. 13A and 13B, respectively. This has been already described with reference to Fig. 11.

If this SMIL file is reproduced, dynamic images/voice and the content of "comment_1.txt" are displayed for the first 5 minutes 20 seconds. Dynamic images/voice and the content of "comment_2.txt" are displayed for 5 minutes from 5 minutes 20 seconds until 10 minutes 20 seconds.

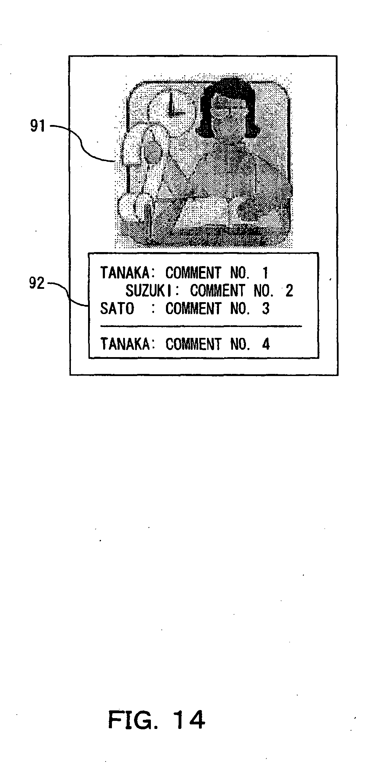

Fig. 14 shows this reproduction screen display. A dynamic image display portion and a comment display portion are represented by 91 and 92, respectively.

Lastly, the respective hardware configurations of the client 10 and multimedia server 20 are described.

The client 10 can be implemented by a general-purpose computer.

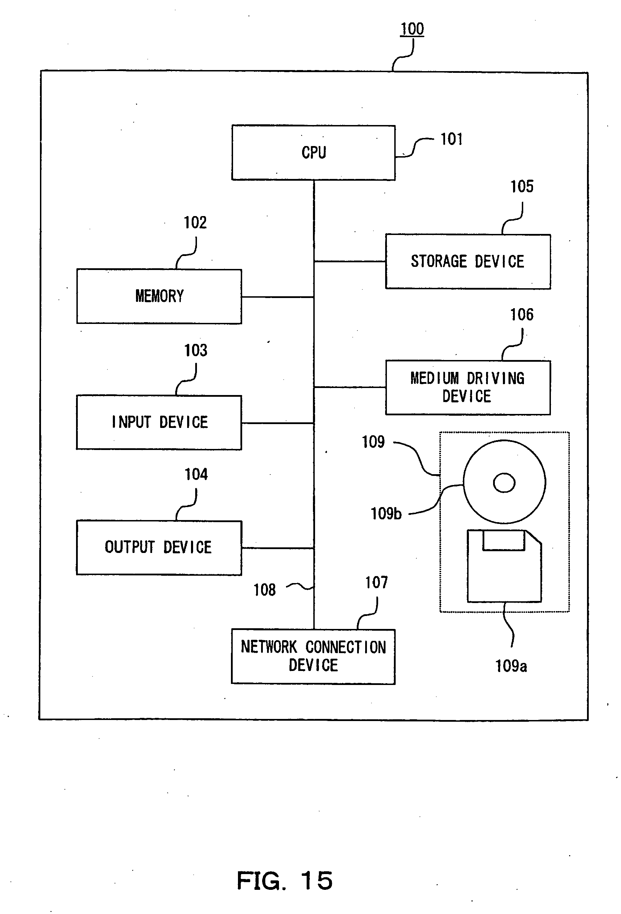

Fig. 15 shows one example of the basic hardware configuration of such a computer.

The data processing device 100 shown in Fig. 15 comprises a CPU 101, a memory 102, an input device 103, an output device 104, a storage device 105, a medium driving device 106 and a network connection device 107, and these components are connected to one another by a bus 108. The configuration shown in Fig. 15 is just an example and the configuration is not limited to this.

The CPU (central processing unit) 101 controls the entire data processing device 100.

The memory 102 temporarily stores a program and data that are usually stored in the storage device 105 (or a portable storage medium 109) and are read, for example, in order to execute the program and to update the data, respectively. For the memory 102, for example, a RAM is used. The CPU 102 performs a variety of the processes described above using the program and data read from the memory 102.

The input device 103 is a user interface used to input the user's instruction and data described above. For the input device 103, for example, a keyboard, a pointing device and a touch panel are used.

The output device 104 is a user interface displaying the comment input screen, images/comments and the like. For the output device 104, for example, a display is used.

The storage device 105 stores the program/data used to enable the data processing device 100 to realize a variety of the processes/functions described above. For the storage device 105, for example, an HDD (hard disc drive), a variety of magnetic disc devices, optical disc devices and magneto-optical disc devices are used.

These program/data can also be stored in the portable storage medium 109. In this case, the program/data stored in the portable storage medium 109 are read by the medium driving device 106. For the portable storage medium 109, for example, an FD (floppy disc) 109a, a CD-Rom 109b, a DVD, a magneto-optical disc are used.

Alternatively, the program/data can be downloaded from an external storage device through a network 40 connected to the network connection device 107. The program/data can be read from a storage medium storing them (portable storage medium 109, etc.), can be downloaded from a network transmitting them (transmission medium) or can be read from a signal transmitted through this transmission medium (transmission signal) when they are downloaded.

The network connection device 107 corresponds to the network I/F (interface) 21 shown in Fig. 2.

The multimedia server 20 has almost the same basic configuration as that shown in Fig. 15.

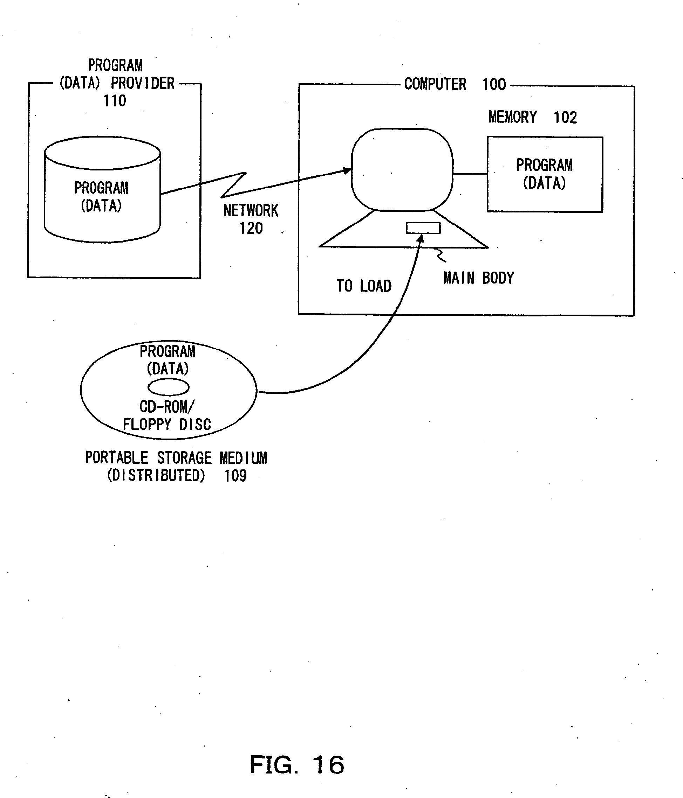

Fig. 16 shows the loading onto the computer of the program.

In Fig. 16, the data processing device (computer) 100 realizes the operations shown in the flowcharts, for example, by reading the program from the storage device 105 to the memory 102, and executing it. The operations can also be realized by downloading the program onto the data processing device 100 from the portable storage medium 109 storing it that is put and distributed in the market.

Alternatively, the operations can realized by downloading the program onto the data processing device 100 from the data processing device (storage device) 110 of an external program provider through a network 120. In this case, the software program can be executed by transmitting a transmission signal obtained by modulating a data signal representing the program with a carrier wave from the data processing device 110 of the program provider through the network 120, which is a transmission medium, and reproducing the program.

### Industrial Applicability

As described above, by using the multimedia electronic tag of the present invention, a comment with a variety of attributes, such as a writer user and the like on multimedia data with a time sequence, such as dynamic image and the like can be shared/exchanged among members through a network. In this way, the smooth cooperative work of arbitrary multimedia data can be realized among the members. For example, the network commenting service, AV data co-editing work supplementary service through a network and the like can be provided.

## Claims

1. A multimedia cooperative work system for exchanging a comment on arbitrary multimedia data among a plurality of clients (4, 20) through a server (1, 10), wherein:
the server (1, 10) comprises:
a multimedia communication unit (16) operable to assign an identifier to multimedia data the registration of which has been requested by a registration requesting client (4, 20) and return the identifier to the registration requesting client (4,20) ;
a multimedia storage unit (13) operable to store the multimedia data;
a management unit (14, 17) operable to obtain electronic mail, by which the registration requesting client (4, 20) notifies other clients of the identifier of the multimedia data, obtain member data from a destination address of the electronic mail and to store and manage the member data in relation to the identifier of the multimedia data;
an electronic tag model generation unit (2,11) operable to generate a model of a multimedia electronic tag in which a comment can be inputted to each scene obtained by dividing the multimedia data in terms of time, in tree shape structure, based on the multimedia data and data stored and managed by the management unit (14), assign an identifier to the multimedia electronic tag and enable the management unit (14) to store and manage the identifier in relation to the multimedia data identifier; and
an electronic tag storage unit (12) operable to store the electronic tag model and also store the multimedia electronic tag if an arbitrary comment is added based on the electronic tag model, and
a client (4, 20) of each member, including the registration requester, comprising:
an electronic tag communication unit (24) operable to obtain a multimedia electronic tag from the server (1, 10) using the multimedia data identifier;
an electronic tag editing unit (5,31) operable to generate and display a comment editing screen (60) by which a comment on an arbitrary scene of multimedia data or a comment on a comment can be inputted using the multimedia electronic tag;
a format conversion unit (6,26) operable to convert a format of the multimedia electronic tag into a multimedia synchronous reproduction format; and
a synchronous reproduction unit (7, 27) operable to synchronize and reproduce the multimedia data and comment using the conversion result of the format conversion unit (6,26).

2. The system according to Claim 1, wherein:
the multimedia electronic tag model generation unit (2,11) of the server (1,1C) is operable to generate the model of a multimedia electronic tag arranged to display in a hierarchical structure description data for a scene that is a time block of multimedia data, the description data comprising a comment, attribute data of the comment and a further comment on the comment, the hierarchical structure allowing the description data to also include description data on a scene that is of shorter time length than and within said time block; and
the server further comprises a divider operable to obtain each scene by dividing multimedia data as requested by an arbitrary client (4, 20), in terms of time.

3. The system according to claim 2, wherein:
said description data describes a publication destination and expiration date of a comment as attribute data of the comment in the multimedia electronic tag, and
the server (1, 10) further comprises a multimedia electronic tag modification and communicaticn unit (3) operable to delete an overdue comment from a multimedia electronic tag, or when receiving a multimedia electronic tag request from a client (4, 20) of an arbitrary member, is operable to transmit the multimedia electronic tag without comment, the publication destination of which are not designated the requesting client (4, 20), to the requesting client (4, 20).

4. The system of any preceding claim, wherein:
the electronic tag editing unit (5,31) of the client (4,20) is operable to display a comment with attribute data attached to each scene of multimedia data corresponding to a multimedia electronic tag, using a multimedia electronic tag obtained from the server (1, 10) or another client (4, 20) and displaying in a hierarchical structure of the tag description data on a scene that is a time block of said multimedia data, the hierarchical structure allowing the description data to also include description data on a scene that is of shorter time length than and within said time block, and simultaneously enable a comment to be inputted to an arbitrary scene or on said comment and update the content of the multimedia electronic tag based on the input.

5. The system according to Claim 4, wherein:
the format conversion unit (6, 26) of the client (4, 20) is operable to convert a format of the multimedia electronic tag into a format for synchronizing and reproducing the multimedia data and comment thereof; and
the synchronous reproduction unit (7, 27) of the client (4, 20) is operable to synchronize and display multimedia data and comments corresponding to each scene of the multimedia data.

6. The system according to any preceding claim, wherein:
said format conversion unit (6, 26) of the client (4, 20) is operable to convert a format of the multimedia electronic tag into a format in which the multimedia data and a comment aggregate of each scene of the multimedia data can be synchronized and reproduced.

7. The system according to any preceding claim, wherein:
the attribute data include at least one of a comment writer name, a comment generation date and a comment adding destination.

8. The system according to any preceding claim, wherein:
the comment editing screen (60) is arranged to allow a publication destination of the comment to be selected and designated;
the system is operable to update the multimedia electronic tag by adding description on the publication destination;
the system is operable to store the multimedia electronic tag after the update; and
the server (1, 10) further comprises an electronic tag communication unit (15) operable to transmit a multimedia electronic tag without comment, the publication destinations of which are designated, to the requesting client (4, 20) if the client requesting the transmission of the multimedia electronic tag is not included in the publication destinations.

9. The system according to any preceding claim, wherein:
the multimedia electronic tag is described in XML.

10. A multimedia cooperative work method for exchanging a comment on arbitrary multimedia data amoing a plurality of clients (4, 20) through a server (1, 10), the method comprising:
the server (1, 10) performing the processes of:
assigning an identifier to multimedia data the registration of which has been requested by a registration requesting client (4, 20) and returning the identifier to the registration requesting client (4,20);
storing the multimedia data;
obtaining electronic mail, by which the registration requesting client (4, 20) notifies other clients of the identifier of the multimedia data, obtaining member data from a destination address of the electronic mail and storing and managing the member data in relation to the identifier of the multimedia data;
generating a model of a multimedia electronic tag in which a comment can be inputted to each scene obtained by dividing the multimedia data in terms of time, in tree shape structure, based on the multimedia data and data stored and managed, assigning an identifier to the multimedia electronic tag and enabling the storing and managing of the identifier in relation to the multimedia data identifier; and
storing the electronic tag model and also storing the multimedia electronic tag if an arbitrary comment is added based on the electronic tag model, and
a client (4, 20) performing the processes of:
obtaining a multimedia electronic tag from the server (1, 10) using the multimedia data identifier;
generating and displaying a comment editing screen (60) by which a comment on an arbitrary scene of multimedia data or a comment on a comment can be inputted using the multimedia electronic tag;
converting a format of the multimedia electronic tag into a multimedia synchronous reproduction format; and
synchronizing and reproducing the multimedia data and comment using the conversion result of the converting process.

11. A computer-readable storage medium that records a program enabling computers to execute a method according to Claim 10.

## Patentansprüche

1. Multimedia-Zusammenarbeitssystem zum Austauschen eines Kommentars über beliebige Multimedia-Daten unter mehreren Clients (4, 20) über einen Server (1, 10), wobei
der Server (1, 10) umfasst:
eine Multimedia-Kommunikationseinheit (16), die betriebsfähig ist, Multimedia-Daten, deren Registrierung durch einen Registrierungsanforderungs-Client (4, 20) angefordert wurde, einen Identifikator zuzuweisen und den Identifikator an den Registrierungsanforderungs-Client (4, 20) zurückzusenden;
eine Multimedia-Speichereinheit (13), die betriebsfähig ist, die Multimedia-Daten zu speichern;
eine Managementeinheit (14, 17), die betriebsfähig ist, elektronische Post zu erhalten, durch die der Registrierungsanforderungs-Client (4, 20) andere Clients über den Identifikator der Multimedia-Daten in Kenntnis setzt, Teilnehmerdaten von einer Zieladresse der elektronischen Post zu erhalten und die Teilnehmerdaten in Bezug auf den Identifikator der Multimedia-Daten zu speichern und zu verwalten;
eine Erzeugungseinheit einer elektronischen Markierungsvorlage (2, 11), die betriebsfähig ist, auf Basis der Multimedia-Daten und der Daten, die in der Managementeinheit (14) gespeichert und durch sie verwaltet werden, eine Vorlage einer elektronischen Multimedia-Markierung zu erzeugen, in welche ein Kommentar für jede Szene, die durch Unterteilen der Multimedia-Daten bezüglich der Zeit erhalten wird, in einer baumförmigen Struktur eingegeben werden kann, der elektronischen Multimedia-Markierung einen Identifikator zuzuweisen und die Managementeinheit (14) zu befähigen, den Identifikator in Bezug auf den Multimedia-Datenidentifikator zu speichern und zu verwalten; und
eine Speichereinheit der elektronischen Markierung (12), die betriebsfähig ist, die elektronische Markierungsvorlage zu speichern und auch die elektronische Multimedia-Markierung zu speichern, wenn ein beliebiger Kommentar auf Basis der elektronischen Markierungsvorlage hinzugefügt ist; und
wobei ein Client (4, 20) eines jeden Teilnehmers, einschließlich des Registrierungsanforderers, umfasst:
eine Kommunikationseinheit einer elektronischen Markierung (24), die betriebsfähig ist, eine elektronische Multimedia-Markierung von dem Server (1, 10) unter Verwendung des Multimedia-Datenidentifikators zu erhalten;
eine Editierungseinheit einer elektronischen Markierung (5, 31), die betriebsfähig ist, einen Kommentar-Editierungsbildschirm (60) zu erzeugen und anzuzeigen, durch den ein Kommentar über eine beliebige Szene der Multimedia-Daten oder ein Kommentar über einen Kommentar unter Verwendung der elektronischen Multimedia-Markierung eingegeben werden kann;
eine Format-Umwandlungseinheit (6, 26), die betriebsfähig ist, ein Format der elektronischen Multimedia-Markierung in ein Multimedia-Synchronreproduktionsformat umzuwandeln; und
eine Synchronreproduktionseinheit (7, 27), die betriebsfähig ist, die Multimedia-Daten und den Kommentar unter Verwendung des Umwandlungsergebnisses der Format-Umwandlungseinheit (6, 26) zu synchronisieren und zu reproduzieren.

2. System nach Anspruch 1, wobei:
die Erzeugungseinheit einer elektronischen Multimedia-Markierungsvorlage (2, 11) des Servers (1, 10) betriebsfähig ist, die Vorlage einer elektronischen Multimedia-Markierung zu erzeugen, die eingerichtet ist, Beschreibungsdaten in einer hierarchischen Struktur für eine Szene anzuzeigen, welche ein Zeitblock von Multimedia-Daten ist, wobei die Beschreibungsdaten einen Kommentar, Attributdaten des Kommentars und einen weiteren Kommentar über den Kommentar umfassen, wobei die hierarchische Struktur ermöglicht, dass die Beschreibungsdaten auch Beschreibungsdaten über eine Szene enthalten, die von einer kürzeren Zeitdauer als der Zeitblock ist und innerhalb des Zeitblocks liegt; und
der Server ferner einen Aufteiler umfasst, der betriebsfähig ist, jede Szene zu erhalten, indem die Multimedia-Daten bezüglich der Zeit aufgeteilt werden, wie durch einen beliebigen Client (4, 20) angefordert ist.

3. System nach Anspruch 2, wobei:
die Beschreibungsdaten einen Publikationsziel und ein Auslaufdatum eines Kommentars als Attributdaten des Kommentars in der elektronischen Multimedia-Markierung beschreiben; und
der Server (1, 10) ferner eine Modifikations- und Kommunikationseinheit der elektronischen Multimedia-Markierung (3) umfasst, die betriebsfähig ist, einen überfälligen Kommentar aus einer elektronischen Multimedia-Markierung zu streichen, oder die bei Empfang einer elektronischen Multimedia-Markierungsanforderung vom einem Client (4, 20) eines beliebigen Teilnehmers betriebsfähig ist, die elektronische Multimedia-Markierung ohne den Kommentar, dessen Publikationsziel der anfordernde Client (4, 20) nicht benannt hat, an den anfordernden Client (4, 20) weiterzuleiten.

4. System nach einem der vorhergehenden Ansprüche, wobei:
die Editierungseinheit einer elektronischen Markierung (5, 31) des Client (4, 20) betriebsfähig ist, einen Kommentar mit Attributdaten, die jeder Szene von Multimedia-Daten entsprechend einer elektronischen Multimedia-Markierung beigefügt sind, anzuzeigen, wobei eine elektronische Multimedia-Markierung verwendet wird, die vom Server (1, 10) oder einem weiteren Client (4, 20) erhalten wurde, und wobei in einer hierarchischen Struktur der Markierungs-Beschreibungsdaten über eine Szene angezeigt wird, welche ein Zeitblock der Multimedia-Daten ist, wobei die hierarchische Struktur ermöglicht, dass die Beschreibungsdaten auch Beschreibungsdaten über einer Szene enthalten, die von einer kürzeren Zeitdauer als der Zeitblock ist und innerhalb des Zeitblocks liegt, und gleichzeitig zu ermöglichen, dass ein Kommentar zu einer beliebigen Szene oder über den Kommentar eingegeben wird, und den Inhalt der elektronischen Multimedia-Markierung auf Basis der Eingabe zu aktualisieren.

5. System nach Anspruch 4, wobei:
die Format-Umwandlungseinheit (6, 26) des Client (4, 20) betriebsfähig ist, ein Format der elektronischen Multimedia-Markierung in ein Format zum Synchronisieren und Reproduzieren der Multimedia-Daten und des Kommentars dazu umzuwandeln; und
die Synchronreproduktionseinheit (7, 27) des Client (4, 20) betriebsfähig ist, Multimedia-Daten und Kommentare, die sich auf jede Szene der Multimedia-Daten beziehen, zu synchronisieren und anzuzeigen.

6. System nach einem der vorhergehenden Ansprüche, wobei:
die Format-Umwandlungseinheit (6, 26) des Client (4, 20) betriebsfähig ist, ein Format der elektronischen Multimedia-Markierung in ein Format umzuwandeln, in dem die Multimedia-Daten und eine Kommentargesamtheit einer jeden Szene der Multimedia-Daten synchronisiert und reproduziert werden können.

7. System nach einem der vorhergehenden Ansprüche, wobei:
die Attributdaten mindestens eines von dem Folgenden enthalten: Name des Kommentarverfassers, Datum der Kommentarerzeugung und Zielort der Kommentarhinzufügung.

8. System nach einem der vorhergehenden Ansprüche, wobei:
der Kommentar-Editierungsbildschirm (60) eingerichtet ist, zu ermöglichen, dass ein Publikationsziel des Kommentars ausgewählt und benannt wird;
das System betriebsfähig ist, die elektronische Multimedia-Markierung zu aktualisieren, indem eine Beschreibung vom Publikationsziel hinzugefügt wird;
das System betriebsfähig ist, die elektronische Multimedia-Markierung nach dem Aktualisieren zu speichern; und
der Server (1, 10) ferner eine Kommunikationseinheit einer elektronischen Markierung (15) umfasst, die betriebsfähig ist, eine elektronische Multimedia-Markierung ohne den Kommentar, dessen Publikationsziele benannt sind, dem anfordernden Client (4, 20) zu übermitteln, wenn der Client, der die Übertragung der elektronischen Multimedia-Markierung anfordert, nicht in den Publikationszielen enthalten ist.

9. System nach einem der vorhergehenden Ansprüche, wobei:
die elektronische Multimedia-Markierung in XML beschrieben ist.

10. Multimedia-Zusammenarbeitsverfahren zum Austauschen eines Kommentars über beliebige Multimedia-Daten unter mehreren Clients (4, 20) über einen Server (1, 10), wobei das Verfahren umfasst:
dass der Server (1, 10) die Prozesse ausführt zum:
Zuweisen eines Identifikators zu Multimedia-Daten, deren Registrierung durch einen Registrierungsanforderungs-Client (4, 20) angefordert wurde, und Zurücksenden des Identifikators an den Registrierungsanforderungs-Client (4, 20);
Speichern der Multimedia-Daten;
Erhalten elektronischer Post, durch die der Registrierungsanforderungs-Client (4,20) andere Clients vom Identifikator der Multimedia-Daten in Kenntnis setzt, Erhalten von Teilnehmerdaten von einer Zieladresse der elektronischen Post und Speichern sowie Verwalten der Teilnehmerdaten in Bezug auf den Identifikator der Multimedia-Daten;
Erzeugen einer Vorlage einer elektronischen Multimedia-Markierung, in die ein Kommentar für jede Szene, welche durch Unterteilen der Multimedia-Daten bezüglich der Zeit erhalten wird, in einer baumförmigen Struktur auf Basis der Multimedia-Daten und gespeicherter sowie verwalteter Daten eingegeben werden kann, Zuweisen eines Identifikators für die elektronische Multimedia-Markierung und Ermöglichen des Speicherns sowie Verwaltens des Identifikators in Bezug auf den Multimedia-Datenidentifikator; und
Speichern der elektronischen Markierungsvorlage und auch Speichern der elektronischen Multimedia-Markierung, wenn ein beliebiger Kommentar auf Basis der elektronischen Markierungsvorlage hinzugefügt ist; und
dass ein Client (4, 20) die Prozesse ausführt zum:
Erhalten einer elektronischen Multimedia-Markierung von dem Server (1, 10) unter Verwendung des Multimedia-Datenidentifikators zu erhalten;
Erzeugen und Anzeigen eines Kommentar-Editierungsbildschirms (60), durch den ein Kommentar über eine beliebige Szene der Multimedia-Daten oder ein Kommentar über einen Kommentar unter Verwendung der elektronischen Multimedia-Markierung eingegeben werden kann;
Umwandeln eines Formats der elektronischen Multimedia-Markierung in ein Multimedia-Synchronreproduktionsformat; und
Synchronisieren und Reproduzieren der Multimedia-Daten sowie des Kommentars unter Verwendung des Umwandlungsergebnisses des Umwandlungsprozesses.

11. Computerlesbares Speichermedium, welches ein Programm aufzeichnet, das Computer in die Lage versetzt, ein Verfahren nach Anspruch 10 auszuführen.

## Revendications

1. Système de travail coopératif multimédia pour échanger un commentaire concernant des données multimédia arbitraires entre une pluralité de clients (4, 20) par l'intermédiaire d'un serveur (1, 10), dans lequel :
le serveur (1, 10) comprend :
une unité de communication multimédia (16) pouvant être actionnée pour assigner un identifiant à des données multimédia dont l'enregistrement a été demandé par un client demandeur d'enregistrement (4, 20) et pour renvoyer l'identifiant au client demandeur d'enregistrement (4, 20) ;
une unité de mémoire multimédia (13) pouvant être actionnée pour mémoriser les données multimédia ;
une unité de gestion (14, 17) pouvant être actionnée pour obtenir un courrier électronique par lequel le client demandeur d'enregistrement (4, 20) avertit les autres clients de l'identifiant des données multimédia, obtient des données de membre depuis une adresse de destination du courrier électronique et pour mémoriser et gérer les données de membre en relation avec l'identifiant des données multimédia ;
une unité de génération de modèle d'étiquette électronique (2, 11) pouvant être actionnée pour générer un modèle d'étiquette électronique multimédia, dans laquelle on peut entrer un commentaire pour chaque scène obtenue en divisant les données multimédia en termes de temps, dans une structure de forme arborescente, en se basant sur les données multimédia et les données mémorisées et gérées par l'unité de gestion (14), pour assigner un identifiant à l'étiquette électronique multimédia et pour permettre à l'unité de gestion (14) de mémoriser et de gérer l'identifiant en relation avec l'identifiant de données multimédia ; et
une unité de mémorisation d'étiquette électronique (12) pouvant être actionnée pour mémoriser le modèle d'étiquette électronique et aussi pour mémoriser l'étiquette électronique multimédia si un commentaire arbitraire est ajouté en se basant sur le modèle d'étiquette électronique, et
un client (4, 20) de chaque membre, incluant le demandeur d'enregistrement, comprenant :
une unité de communication d'étiquette électronique (24) pouvant être actionnée pour obtenir une étiquette électronique multimédia depuis le serveur (1, 10) en utilisant l'identifiant de données multimédia ;
une unité d'édition d'étiquette électronique (5, 31) pouvant être actionnée pour générer et afficher un écran d'édition de commentaire (60) au moyen duquel on peut entrer un commentaire concernant une scène arbitraire des données multimédia ou un commentaire concernant un commentaire en utilisant l'étiquette électronique multimédia ;
une unité de conversion de format (6, 26) pouvant être actionnée pour convertir le format de l'étiquette électronique multimédia en un format de reproduction synchrone multimédia ; et
une unité de reproduction synchrone (7, 27) pouvant être actionnée pour synchroniser et pour reproduire les données multimédia et le commentaire en utilisant le résultat de conversion de l'unité de conversion de format (6, 26).

2. Système selon la revendication 1, dans lequel :
l'unité de génération de modèle d'étiquette électronique multimédia (2, 11) du serveur (1, 10) peut être actionnée pour générer le modèle d'une étiquette électronique multimédia agencée pour afficher dans une structure hiérarchique des données de description d'une scène qui est un bloc horaire de données multimédia, les données de description comprenant un commentaire, des données d'attribut du commentaire et un autre commentaire concernant le commentaire, la structure hiérarchique permettant aux données de description d'inclure également des données de description d'une scène qui est d'une durée plus courte et dans le même bloc horaire ; et
le serveur comprend en outre un diviseur pouvant être actionné pour obtenir chaque scène en divisant les données multimédia comme demandé par un client arbitraire (4, 20), en termes de temps.

3. Système selon la revendication 2, dans lequel :
lesdites données de description décrivent une destination de publication et une date d'expiration d'un commentaire en tant que données d'attribut du commentaire dans l'étiquette électronique multimédia ; et
le serveur (1, 10) comprend en outre une unité de modification et de communication d'étiquette électronique multimédia (3) pouvant être actionnée pour supprimer un commentaire tardif d'une étiquette électronique multimédia, ou lors de la réception d'une demande d'étiquette électronique multimédia depuis un client (4, 20), d'un membre arbitraire, pouvant être actionnée pour transmettre l'étiquette électronique multimédia sans commentaire, dont la destination de publication ne désigne pas le client demandeur (4, 20), au client demandeur (4, 20).

4. Système selon l'une quelconque des revendications précédentes, dans lequel :
l'unité d'édition d'étiquette électronique (5, 31) du client (4, 20) peut être actionnée pour afficher un commentaire avec des données d'attribut attachées à chaque scène de données multimédia correspondant à une étiquette électronique multimédia, en utilisant une étiquette électronique multimédia obtenue depuis le serveur (1, 10) ou d'un autre client (4, 20) et en affichant dans une structure hiérarchique des données de description d'étiquette sur une scène qui est un bloc horaire desdites données multimédia, la structure hiérarchique permettant également aux données de description d'inclure des données de description concernant une scène d'une durée plus courte et dans ledit bloc horaire, et permettre en même temps d'entrer un commentaire concernant une scène arbitraire ou concernant ledit commentaire et de mettre à jour le contenu de l'étiquette électronique multimédia en se basant sur l'entrée.

5. Système selon la revendication 4, dans lequel :
l'unité de conversion de format (6, 26) du client (4, 20) peut être actionnée pour convertir le format de l'étiquette électronique multimédia en un format pour synchronisation et reproduction de ses données multimédia et commentaire ; et
l'unité de reproduction synchrone (7, 27) du client (4, 20) peut être actionnée pour synchroniser et afficher des données multimédia et des commentaires correspondant à chaque scène des données multimédia.

6. Système selon l'une quelconque des revendications précédentes, dans lequel :
ladite unité de conversion de format (6, 26) du client (4, 20) peut être actionnée pour convertir le format de l'étiquette électronique multimédia en un format dans lequel les données multimédia et un ensemble de commentaires de chaque scène des données multimédia peuvent être synchronisés et reproduits.

7. Système selon l'une quelconque des revendications précédentes, dans lequel :
les données d'attribut comportent au moins un élément parmi un nom de rédacteur de commentaire, une date de génération de commentaire et une destination d'addition de commentaire.

8. Système selon l'une quelconque des revendications précédentes, dans lequel :
l'écran d'édition de commentaire (60) est agencé pour permettre de sélectionner et de désigner une destination de publication du commentaire ;
le système peut être actionné pour mettre à jour l'étiquette électronique multimédia en ajoutant une description de la destination de publication ;
le système peut être actionné pour mémoriser l'étiquette électronique multimédia après la mise à jour ; et
le serveur (1, 10) comprend en outre une unité de communication d'étiquette électronique (15) pouvant être actionnée pour transmettre une étiquette électronique multimédia sans commentaire, dont les destinations de publication sont désignées, vers le client demandeur (4, 20) si le client demandant la transmission de l'étiquette électronique multimédia n'est pas inclus dans les destinations de publication.

9. Système selon l'une quelconque des revendications précédentes, dans lequel :
l'étiquette électronique multimédia est décrite en XML.

10. Procédé de travail coopératif multimédia pour échanger un commentaire concernant des données multimédia arbitraires entre une pluralité de clients (4, 20) par l'intermédiaire d'un serveur (1, 10), le procédé comprenant :
l'exécution par le serveur (1, 10) du processus consistant à :
assigner un identifiant aux données multimédia dont l'enregistrement a été demandé par un client demandeur d'enregistrement (4, 20) et renvoyer l'identifiant au client demandeur d'enregistrement (4, 20) ;
mémoriser les données multimédia ;
obtenir un courrier électronique par lequel le client demandeur d'enregistrement (4, 20) avertit les autres clients de l'identifiant des données multimédia, obtenir des données de membre depuis une adresse de destination du courrier électronique et mémoriser et gérer les données de membre en relation avec l'identifiant des données multimédia ;
générer un modèle d'étiquette électronique multimédia, dans lequel on peut entrer un commentaire pour chaque scène obtenue en divisant les données multimédia en termes de temps, dans une structure de forme arborescente, en se basant sur les données multimédia et les données mémorisées et gérées, en assignant un identifiant à l'étiquette électronique multimédia et en permettant la mémorisation et la gestion de l'identifiant en relation avec l'identifiant de données multimédia ; et
mémoriser le modèle d'étiquette électronique et aussi mémoriser l'étiquette électronique multimédia si un commentaire arbitraire est ajouté en se basant sur le modèle d'étiquette électronique, et
l'exécution par un client (4, 20) du processus consistant à :
obtenir une étiquette électronique multimédia depuis le serveur (1, 10) en utilisant l'identifiant de données multimédia ;
générer et afficher un écran d'édition de commentaire (60) au moyen duquel on peut entrer un commentaire concernant une scène arbitraire des données multimédia ou un commentaire concernant un commentaire en utilisant l'étiquette électronique multimédia ;
convertir le format de l'étiquette électronique multimédia en un format de reproduction synchrone multimédia ; et
synchroniser et reproduire les données multimédia et le commentaire en utilisant le résultat de conversion du processus de conversion.

11. Support d'enregistrement lisible par un ordinateur contenant un programme permettant à des ordinateurs d'exécuter un procédé selon la revendication 10.
